# EUROPÄISCHE PATENTSCHRIFT

(11) **EP 3 944 468 B1**
(45) Veröffentlichungstag und Bekanntmachung des Hinweises auf die Patenterteilung: **18.03.2026**
(21) Anmeldenummer: 21186534.0
(22) Anmeldetag: 19.07.2021
(51) Int. Cl.: H02K 3/47, H02K 41/02, H02K 3/24, H02K 5/20

(54) **WICKLUNGSANORDNUNG FÜR EINEN LINEARMOTOR MIT PARALLEL ANGEORDNETEN SPULENPAAREN AUS EINEM ZUSAMMENHÄNGENDEN ELEKTRISCHEN LEITER**
WINDING ARRANGEMENT FOR A LINEAR MOTOR WITH PARALLEL COIL PAIRS OF A CONTINUOUS ELECTRICAL CONDUCTOR
AGENCEMENT D'ENROULEMENT POUR UN MOTEUR LINÉAIRE POURVU DE PAIRES PARALLÈLES DE BOBINES À PARTIR D'UN CONDUCTEUR ÉLECTRIQUE CONNEXE

(30) Priorität: 24.07.2020 DE 102020119589
(43) Veröffentlichungstag der Anmeldung: 26.01.2022
(73) Patentinhaber: Intrasys GmbH Innovative Transportsysteme, 80339 München (DE)
(72) Erfinder: Grimm, Arnulf, 86977 Burggen (DE); Hollmer, Tobias, 80796 München (DE)
(74) Vertreter: Ruttensperger Lachnit Trossin Gomoll

(56) Entgegenhaltungen:
- WO-A1-2016/202798
- WO-A2-03/021741
- JP-A- 2012 147 630
- US-A- 5 751 077
- US-A1- 2020 048 016

## Beschreibung

Die vorliegende Erfindung betrifft einen Linearmotor-Stator mit einer bestrombaren Wicklungsanordnung gemäß dem Oberbegriff von Anspruch 1.

Eine im Oberbegriff des Anspruchs 1 beschriebene Wicklungsanordnung für einen Linearmotor ist aus der JP 2012-147630 A bekannt.

Eine weitere Wicklungsanordnung ist aus der WO 2016/202798 A1 bekannt. Die bekannte Wicklungsanordnung umfasst außerdem ein flächiges Kühlgehäuse, welches von einer Kühlflüssigkeit durchströmbar ist. Das Kühlgehäuse weist in jeder Richtung orthogonal zu den Spulenpaar-Wicklungsachsen in etwa die Abmessungen eines die Wicklungsanordnung aufnehmenden Spulengehäuses auf. Wenigstens eine Spule eines jeden Spulenpaars aus erster und zweiter Spule berührt das Kühlgehäuse, sodass im Spulenpaar aufgrund des ohm'schen Widerstands entstehende Wärme konduktiv an das Kühlgehäuse übertragen und von dort konvektiv durch die Kühlflüssigkeit abtransportiert werden kann.

Das flächige Kühlgehäuse kann entweder zwischen der ersten und der zweiten Spule eines jeden Spulenpaars oder an einer Seite des Spulenpaars angeordnet sein.

Eine stete Anforderung an derartige Wicklungsanordnungen ist, dass ihre Dickenabmessung längs der Spulen-Wicklungsachsen sowie längs der Spulenpaar-Wicklungsachsen möglichst gering ist.

Eine Wicklungsanordnung mit geringer derartiger Dickenabmessung bei hoher Kupferdichte im Spulengehäuse ist aus der DE 10 2006 023 493 B4 bekannt. Aus dieser Druckschrift sind sogar Wicklungsanordnungen bekannt, welche mehr als zwei Spulenlagen aufweisen. Bei diesen bekannten Wicklungsanordnungen sind die Spulen unterschiedlicher Lagen relativ zueinander längs der Folgeachse in sehr komplizierter Weise derart versetzt angeordnet, dass für jede Spule gilt, dass ihrem einen zur Folgeachse orthogonal verlaufenden Spulenabschnitt ein ebenfalls zur Folgeachse orthogonal verlaufender Spulenabschnitt einer Wicklung einer längs der Spulen-Wicklungsachse benachbarten Spule einer anderen Spulenlage gegenüberliegt und dieser Spulenabschnitt der gleichen elektrischen Phase zugeordnet und zu jedem Zeitpunkt in gleicher Richtung von Strom durchflossen ist, während dem jeweils anderen zur Folgeachse orthogonalen Spulenabschnitt derselben Spule in derselben benachbarten Spulenlage kein Spulenabschnitt gegenüberliegt.

Da üblicherweise bei der Herstellung einer Wicklungsanordnung zunächst die Spulen angeordnet und nach ihrer Anordnung miteinander elektrisch verbunden, also verschaltet, werden, birgt die komplizierte Anordnung und Verschaltung der Spulen der aus der DE 10 2006 023 493 B4 bekannten Wicklungsanordnung ein unerwünscht hohes Risiko einer fehlerhaften Verschaltung der einzelnen Spulen miteinander, was entweder zu einer Beschädigung einer fehlerhaft verschalteten Wicklungsanordnung oder/und zu einem unerwünschten Reparaturaufwand führt. Außerdem ist durch den komplizierten Verlauf einer Vielzahl von sich kreuzenden Leiterabschnitten das Risiko von Kurzschlüssen erhöht.

Das die Spulen und den flächigen Kühlkörper aufnehmende Spulengehäuse der aus der WO 2016/202798 A1 bekannten Wicklungsanordnung trennt die beiden Gehäusebauteile, welche das bekannte Spulengehäuse bilden, vollständig voneinander. Der flächige Kühlkörper erstreckt sich flächengleich mit den Gehäusebauteilen. Die aus der WO 2016/202798 A1 bekannte Wicklungsanordnung offenbart ausweislich ihrer in Figur 5 der WO 2016/202798 A1 gezeigten Ausführungsform mit zwischen der ersten Spulenlage und der zweiten Spulenlage angeordnetem Kühlgehäuse separate Spulenlagen, die jeweils für sich alleine genommen bereits als Wicklungsanordnung funktionieren müssen und lediglich längs ihrer Spulen-Wicklungsachsen nebeneinander angeordnet sind, um im Bereich der Spulen durch Spulenpaarbildung den Kupferanteil zu erhöhen. Eine Spule ist daher nur mit einer Spule derselben Lage elektrisch verbunden. Hier können zwar zur Erleichterung der Montage baugleiche Spulenlagen vorbereitet und dann nebeneinander angeordnet werden. Jedoch führt auch dies zu einem hohen Aufwand zur elektrischen Verbindung der einzelnen Spulen in der jeweiligen Lage.

Außerdem erhöht der flächige Kühlkörper die längs der Spulenpaar-Wicklungsachsen zu messende Breite der betriebsbereiten Wicklungsanordnung.

Aus der US 2020/0048016 A1 ist ein Antriebsmodul für ein lineares Transportsystem bekannt, welches ein Gehäuse und einen Stator umfasst. Der Stator ist in dem Gehäuse angeordnet und umfasst eine oder mehrere Spulenanordnungen mit jeweils wenigstens einer Spule und einem Statorzahn. Die Spulenanordnung ist so angesteuert, dass sie ein wanderndes Magnetfeld bereitstellt. Das Magnetfeld tritt aus der Spulenanordnung an den Endflächen aus und durchdringt die Gehäuseschalen, um schließlich in Wechselwirkung mit einer Magnetanordnung an einem Transportschlitten auf der Außenseite des Gehäuses zu treten.

Aus der WO 03/021741 A2 ist ein luftgekühlter Linearmotor bekannt. Ein geschlossenes Gehäuse des bekannten Linearmotors enthält einen Modulblock aus einem Wicklungskörper und darauf aufgebrachten Wicklungen. Kühlluft wird über einen am Gehäuse dafür vorgesehenen Lufteinlass in das Gehäuse eingeleitet.

Aus der US 5,751,077 ist ein Linearmotor-Anker mit einem abgedichteten Metallgehäuse bekannt, in welchem eine zentrale Kammer ausgebildet ist. In der zentralen Kammer ist ein Laminationsstapel aufgenommen. In dem Laminationsstapel ist eine Spulenanordnung angeordnet. Die zentrale Kammer wird zur Kühlung der Spule mit einem elektrisch nicht-leitenden Fluid gespült, wobei das Fluid zur Erleichterung einer bidirektionalen Kühlung in entgegengesetzte Richtungen geleitet wird.

Es ist Aufgabe der vorliegenden Erfindung, den eingangs genannten Linearmotor-Stator mit seiner Wicklungsanordnung derart zu verbessern, dass er bei im Wesentlichen gleicher Leistungsfähigkeit mit möglichst geringer Dicke und verringertem Fehlerpotenzial der Verschaltung der Spulenpaare der Wicklungsanordnung so ausgebildet werden kann, dass er ein möglichst fein aufgelöstes Magnetfeld bereitstellt.

Diese Aufgabe löst die vorliegende Erfindung durch einen Linearmotor-Stator mit allen Merkmalen des Anspruchs 1. Wie bereits aus der JP 2012-147630 A bekannt, ist wenigstens ein Spulenpaar als Einzelleitung-Spulenpaar ausgebildet, bei dem die erste und die zweite Spule jeweils einen bezüglich der Spulenpaar-Wicklungsachse radial außen liegenden Anschlussabschnitt zum Anschluss an eine Phase einer Energieversorgung oder an eine weitere Spule
aufweisen und im Spulenpaar-Augenbereich miteinander elektrisch leitend verbunden sind.

Durch die elektrische Verbindung der ersten und der zweiten Spule eines Spulenpaars im Augenbereich ist das gesamte Spulenpaar durch einen einzigen zusammenhängenden elektrischen Leiter gebildet. Aus diesem Grunde ist ein derartiges Spulenpaar nachfolgend als "Einzelleitung-Spulenpaar" bezeichnet.

Die elektrisch leitende Verbindung der ersten und der zweiten Spule des Einzelleitung-Spulenpaars im Augenbereich ermöglicht die Verbindung der beiden Spulen in einem Bauraumbereich, welcher zunächst unbelegt ist, sodass Raum zur elektrisch leitenden Verbindung der beiden Spulen des Einzelleitung-Spulenpaars ausreichend zur Verfügung steht. Das so gebildete Einzelleitung-Spulenpaar weist nur noch zwei Anschlussabschnitte auf, nämlich je einen Anschlussabschnitt zur Verschaltung mit einer längs der Folgeachse vorhergehenden Spule oder Energieversorgung, insbesondere einem vorhergehenden Einzelleitung-Spulenpaar, und mit einer längs der Folgeachse folgenden Spule oder Energieversorgung, insbesondere einem folgenden Einzelleitung-Spulenpaar.

Grundsätzlich kann die Wicklungsanordnung nur genau ein Einzelleitung-Spulenpaar aufweisen. Wegen der oben geschilderten Vorteile weist die Wicklungsanordnung jedoch bevorzugt eine Mehrzahl von Einzelleitung-Spulenpaaren auf. So kann daran gedacht sein, einzelne Belegungsorte für Spulen der Wicklungsanordnung nur mit jeweils einer einzelnen Spule in der ersten Lage oder in der zweiten Lage oder teilweise in der ersten und teilweise in der zweiten Lage zu belegen. Beispielsweise kann der erste und der letzte Belegungsort der Wicklungsanordnung längs der Folgeachse nur mit einer einzelnen Spule belegt sein, um eingangs und ausgangs der Wicklungsanordnung bei betragsmäßig vorgegebener Bestromung ein einleitendes bzw. ausleitendes schwächeres Magnetfeld bereitzustellen, während alle zwischen der ersten und der letzten Spule gelegenen Belegungsorte mit Einzelleitung-Spulenpaaren belegt sind, um lokal ein möglichst starkes Magnetfeld zu erzeugen. Besonders bevorzugt weist die Wicklungsanordnung zur Bereitstellung eines möglichst homogenen Magnetfelds über die gesamte Folgeachse ausschließlich Einzelleitung-Spulenpaare auf.

Die Spulen-Wicklungsachsen der Spulen der Wicklungsanordnung, insbesondere die Spulenpaar-Wicklungsachsen der Wicklungsanordnung, sind bevorzugt zueinander parallel und längs der Folgeachse hintereinander angeordnet. Die Wicklungsanordnung dient in einer bevorzugten Ausführungsform als Wicklungsanordnung eines Linearmotors und übt im Zusammenwirken mit einer Magnetanordnung im Falle eines Synchronmotors oder mit einer Induktionsanordnung, etwa einer Platte aus elektrisch leitendem Material, im Falle eines Asynchronmotors eine längs der Folgeachse wirkende Kraft auf die längs der Folgeachse relativ zur Wicklungsanordnung bewegte Magnetanordnung bzw. Induktionsanordnung aus. In der Regel wird die Wicklungsanordnung aufgrund der notwendigen Energieversorgung im erfindungsgemäßen Falle eines Einsatzes als Linearmotor-Stator streckenfest an einer von einem linearmotorisch angetriebenen Fahrzeug durchfahrenden Strecke angeordnet sein, während die Magnetanordnung bzw. die Induktionsanordnung fahrzeugfest am Fahrzeug angeordnet ist. Das Fahrzeug ist vorzugsweise spurgebunden. Bevorzugt kommt die vorliegend diskutierte Wicklungsanordnung an Fahrgeschäften zur Volksbelustigung zum Einsatz, wie etwa an Achterbahnen, Geisterbahnen, Wasserbahnen, wobei jedoch auch ein Einsatz im öffentlichen oder privaten Schienenverkehr nicht ausgeschlossen sein soll. Die Spur kann daher durch eine einzelne Schiene, durch ein Schienenpaar oder auch durch eine Rinne definiert sein. Die Spur kann eine geschlossene Bahn sein, welche ohne Richtungsänderung vom spurgebunden Fahrzeug mehrfach hintereinander durchfahren werden kann, oder die Spur kann eine offene Bahn sein, welche vom spurgebundenen Fahrzeug zwischen den Bahnenden nacheinander stets nur nach einem Richtungswechsel wiederholt durchfahren werden kann.

Wenngleich in der vorliegenden Anmeldung das Hauptaugenmerk auf der Verwendung der Wicklungsanordnung in einem linearmotorischen Antrieb liegt, ist die Wicklungsanordnung durch gezieltes Kurzschließen ihrer Spulen bzw. ihrer Einzelleitung-Spulenpaare, auch als Teil einer linearen Induktionsbremse verwendbar, wobei dann die Wicklungsanordnung im Zusammenwirken mit einer relativ zu ihr bewegten Magnetanordnung als Lineargenerator wirkt.

Um sicherzustellen, dass sich die von beiden Spulen eines Einzelleitung-Spulenpaars bei ihrer Bestromung erzeugten Magnetfelder gegenseitig verstärken, ist, bei Betrachtung des Einzelleitung-Spulenpaars längs seiner Spulenpaar-Wicklungsachse, die eine Spule aus erster und zweiter Spule in einem Wicklungssinn von radial außen nach radial innen gewickelt und ist die jeweils andere Spule im selben Wicklungssinn von radial innen nach radial außen gewickelt. Durch die bei Betrachtung des Einzelleitung-Spulenpaars längs der Spulenpaar-Wicklungsachse entgegengesetzten Wicklungssinne der an der Bildung des Einzelleitung-Spulenpaars beteiligten ersten und zweiten Spule kann der Wicklungsdraht von der einen Spule von radial außen nach radial innen in den Augenbereich der einen Spule geführt werden, wo er mit dem Wicklungsdraht der jeweils anderen Spule in deren Augenbereich elektrisch verbunden und durch die andere Spule wieder von radial innen nach radial außen geführt werden kann. Somit liegen die beiden Anschlussabschnitte des Einzelleitung-Spulenpaars vorteilhaft leicht erreichbar jeweils radial außen, während die elektrisch leitende Verbindung zwischen der ersten und der zweiten Spule im Spulenpaar-Augenbereich hergestellt werden kann.

Bevorzugt sind die erste und die zweite Spule des Einzelleitung-Spulenpaars derart angeordnet, dass sich ihre beiden zur Folgeachse orthogonalen Abschnitte bei Betrachtung längs der Spulenpaar-Wicklungsachse überlappen und dass sich ihre beiden zur Folgeachse parallelen Abschnitte überlappen. Vorteilhafterweise sind die erste und die zweite Spule des Einzelleitung-Spulenpaars gleich groß, sodass sie in im Wesentlichen gleichem Maße zu dem von dem Einzelleitung-Spulenpaar erzeugten Magnetfeld beitragen. Somit können auch die ohm'schen Widerstände der beiden Spulen des Einzelleitung-Spulenpaars in etwa gleich groß ausgebildet sein, sodass die beiden Spulen des Einzelleitung-Spulenpaars im Bestromungsbetrieb thermisch betragsmäßig in etwa gleich belastet sind.

Dieser bevorzugten Ausführungsform folgend, kann die Herstellung eines Einzelleitung-Spulenpaars aus einer ersten und einer zweiten Spule dadurch erleichtert werden, dass die erste und die zweite Spule des Einzelleitung-Spulenpaars identisch ausgebildet und relativ zueinander um eine sowohl zur Folgeachse als auch zur Spulenpaar-Wicklungsachse orthogonale Anordnungsachse um 180° verdreht angeordnet sind. Dann genügt es nämlich, lediglich eine Art von Spule zu fertigen und je zwei Spulen in der genannten relativ zueinander vertreten Anordnung zu einem Einzelleitung-Spulenpaar zu verbinden. Die elektrisch leitende Verbindung der ersten und der zweiten Spule im Spulenpaar-Augenbereich ist zur Erleichterung der Fertigung bevorzugt eine stoffschlüssige Fügeverbindung, etwa durch Löten, gewünschtenfalls unter Verwendung eines die beiden radial inneren Enden der ersten und der zweiten Spule umgebenden Verbindungsmantels. Der Verbindungsmantel kann ein um die beiden radial inneren Enden der ersten und der zweiten Spule gewickelter Materialstreifen sein oder kann eine über die beiden radial inneren Enden der ersten und der zweiten Spule aufgeschobene Hülse sein.

Es sei jedoch darauf hingewiesen, dass die elektrisch leitende Verbindung der radial inneren Endbereiche der ersten und der zweiten Spule keine stoffschlüssige Fügeverbindung sein muss. Die erste und die zweite Spule können auch durch eine einstückige Länge von Wicklungsdraht gebildet sein, was jedoch die Herstellung eines Einzelleitung-Spulenpaars gegenüber der Verwendung gesondert hergestellter und anschließend gefügter Spulen erschwert.

Wenngleich die erste und die zweite Spule beliebige Arten von Spulen sein können, ist es zur Sicherstellung ausreichender thermischer Belastbarkeit, also möglichst geringen ohm'schen Widerstands, bei gleichzeitig möglichst geringer Abmessung längs der Spulen-Wicklungsachse und geringem Fertigungsaufwand bevorzugt, wenn das die erste und die zweite Spule des wenigstens einen Einzelleitung-Spulenpaars jeweils Spulen, wegen der erzielbaren höheren Kupferdichte bevorzugt Flachdrahtspulen, mit nur einer Wicklungsebene sind. Bevorzugt weisen die erste und die zweite Spule jeweils vier gerade Spulenabschnitte auf, von welchen je zwei unmittelbar um die Spulen-Wicklungsachsen aufeinanderfolgende Spulenabschnitte einen Winkel von 70° bis 110°, vorzugsweise von 90° einschließen. Zwischen geraden Spulenabschnitten können gekrümmte Spulenabschnitte ausgebildet sein, wobei sich bevorzugt deren Krümmungsradius mit zunehmender Annäherung an den Spulen-Augenbereich verringert, um das Kupfer des Wicklungsdrahts der jeweiligen Spule möglichst dicht und möglichst spaltfrei anordnen zu können.

Zur Erzeugung des in einem Linearmotor gewünschten sich zeitlich und räumlich ändernden Magnetfeldes ist es vorteilhaft, wenn die Wicklungsanordnung zum Anschluss an eine Energieversorgung mit unterschiedlichen elektrischen Phasen ausgebildet ist. Dann enthält die Wicklungsanordnung einen Strang mit elektrisch in Reihe geschalteten Einzelleitung-Spulenpaaren, für jede anschließbare elektrische Phase. Dieser Strang ist nachfolgend auch als "Phasenstrang" bezeichnet. Wie oben bereits ausgeführt wurde, umfasst jeder derartige Phasenstrang erfindungsgemäß jeweils eine Mehrzahl von Einzelleitung-Spulenpaaren.

Als eine vorteilhafte Anordnung von einzelnen, jeweils anderen elektrischen Phasen zugeordneten Einzelleitung-Spulenpaaren ist erfindungsgemäß vorgesehen, dass die Wicklungsanordnung wenigstens drei längs der Folgeachse unmittelbar aufeinander folgende Einzelleitung-Spulenpaare aufweist, von welchen jedes Einzelleitung-Spulenpaar einer anderen Phase zugeordnet ist als die beiden längs der Folgeachse unmittelbar benachbarten Einzelleitung-Spulenpaare, zwischen welchen das Einzelleitung-Spulenpaar angeordnet ist. Somit kann längs der Folgeachse ein von Einzelleitung-Spulenpaar zu nachfolgendem Einzelleitung-Spulenpaar sich fein abgestuft änderndes Magnetfeld erzeugt werden.

Durch die Zusammenfassung von einander axial bezüglich ihrer Spulen-Wicklungsachsen benachbart unter Bildung eines gemeinsamen Spulenpaar-Augenbereichs angeordneten Spulen: erste und zweite Spule, zu einem aus einem einzigen bestrombaren elektrischen Leiter gebildeten Einzelleitung-Spulenpaar ergibt sich außerdem eine erhebliche Erleichterung in der Verschaltung der einzelnen Einzelleitung-Spulenpaare der Wicklungsanordnung untereinander. Zur Erleichterung der Verschaltung kann für jeden an eine andere elektrische Phase angeschlossenen Strang mit je einer Mehrzahl von Einzelleitung-Spulenpaaren gelten, dass von in einem Phasenstrang längs der Folgeachse unmittelbar aufeinander folgenden, also elektrisch unmittelbar, ohne Zwischenanordnung weiterer Spulen derselben Phase, mit einander verbundenen Einzelleitung-Spulenpaaren ein radial außen liegender Anschlussabschnitt eines vorhergehenden Einzelleitung-Spulenpaars mit einem radial außen liegenden Anschlussabschnitt eines nachfolgenden Einzelleitung-Spulenpaars zu einem die beiden Einzelleitung-Spulenpaare elektrisch leitend verbindenden Verbindungsleitungsabschnitt verbunden ist. Dabei ist der eine Anschlussabschnitt im Lagenbereich einer Lage aus erster und zweiter Lage gelegen und ist der jeweils andere Anschlussabschnitt im Lagenbereich der jeweils anderen Lage aus erster und zweiter Lage gelegen. Der Verbindungsleitungsabschnitt, welcher zwei in einem Phasenstrang längs der Folgeachse unmittelbar aufeinanderfolgende Einzelleitung-Spulenpaare elektrisch leitend verbindet, verläuft folglich stets über die virtuelle Trennfläche zwischen der ersten Spulenlage und der zweiten Spulenlage. Im Gegensatz zum oben beschriebenen Stand der Technik können so mit einem Verbindungsleitungsabschnitt zwei Einzelleitung-Spulenpaare, also vier Spulen, elektrisch miteinander verbunden werden. Dies gilt für eine von der vorliegenden Erfindung nicht umfasste einphasige Wicklungsanordnung ebenso wie für eine mehrphasige Wicklungsanordnung.

Da sich bei mehrphasigen, also mit mehreren elektrischen Phasen verbindbaren, Wicklungsanordnungen, Verbindungsleitungsabschnitte kreuzen, ist es zur Bereitstellung des für ein Kreuzen notwendigen Bauraums vorteilhaft, wenn der Verbindungsleitungsabschnitt von jedem der durch ihn verbundenen Einzelleitung-Spulenpaare in einem anderen Lagenbereich von dem jeweiligen Einzelleitung-Spulenpaar weg verläuft und in einem mit Abstand von beiden durch den Verbindungsleitungsabschnitt verbundenen Einzelleitung-Spulenpaaren entfernt gelegenen Wechselabschnitt zwischen den beiden Lagenbereichen verläuft. Somit kann der Wechsel von einer Spulenlage in die jeweils andere Spulenlage nur in dem Wechselabschnitt erfolgen, welcher von den beteiligten Einzelleitung-Spulenpaaren mit Abstand angeordnet ist. Der Abstand ist dabei ein Abstand orthogonal zu den Spulenpaar-Wicklungsachsen der durch den Verbindungsleitungsabschnitt verbundenen Einzelleitung-Spulenpaare.

Bevorzugt können die Wechselabschnitte in einem längs der Folgeachse verlaufenden und mit Abstand von den Einzelleitung-Spulenpaaren angeordneten Wechselbereich liegen. Die Abmessung des Wechselbereichs längs der Folgeachse ist dabei dessen größte Abmessung.

Bevorzugt liegt zwischen einem längs der Folgeachse verlaufenden Spulenabschnitt der Wicklungsanordnung, in welchem alle Spulen aufgenommen sind, und dem Wechselbereich, in welchem bevorzugt alle Wechselabschnitte aufgenommen sind, ein Verbindungsbereich, in welchem ein den jeweiligen Wechselabschnitt mit seinen unmittelbar angeschlossenen Einzelleitung-Spulenpaaren verbindender Verbindungsabschnitt des Phasenstrangs angeordnet ist. Der besseren Übersichtlichkeit halber ist bevorzugt im Verbindungsbereich kein Wechselabschnitt angeordnet. Bevorzugt verläuft der Verbindungsabschnitt des elektrischen Leiters des Phasenstrangs mit einer Verlaufskomponente orthogonal zu den Einzelleitung-Spulenachsen und mit einer Verlaufskomponente längs der Folgeachse. Ebenso bevorzugt verläuft der Wechselabschnitt des elektrischen Leiters des Phasenstrangs mit einer Verlaufskomponente längs der Folgeachse und mit einer Verlaufskomponente längs der Spulenpaar-Wicklungsachsen. Besonders bevorzugt verlaufen die genannten Abschnitte zu Erleichterung ihrer Verlegung jeweils nur mit den genannten Verlaufskomponenten.

Bevorzugt erstreckt sich für eine möglichst kollisionsfreie Verlegung der Verbindungsleitungsabschnitte der Wechselabschnitt wenigstens eines Verbindungsleitungsabschnitts, vorzugsweise aller Verbindungsleitungsabschnitte, über die - bezogen auf die Folgeachse - axiale Längsmitte des axialen Abstands hinweg, welchen die durch den Verbindungsleitungsabschnitt unmittelbar verbundenen Einzelleitungs-Spulenpaare voneinander haben. Der Wechselabschnitt erstreckt sich somit beiderseits der axialen Abstandslängsmitte. Besonders bevorzugt erstreckt sich der Wechselabschnitt zu beiden axialen Seiten der Abstandslängsmitte gleich weit von der Abstandslängsmitte weg. Ebenso ist es für eine vorteilhaft kollisionsfreie Verlegung vorteilhaft, wenn der von einem Einzelleitungs-Spulenpaar zu einem Wechselabschnitt verlaufende Verbindungsabschnitt geradlinig verläuft. Besonders bevorzugt ist wenigstens ein Verbindungsleitungsabschnitt, vorzugsweise jeder Verbindungsleitungsabschnitt, bezüglich einer sowohl zur Folgeachse als auch zu den Spulenpaar-Wicklungsachsen orthogonalen Symmetrieachse invariant bezüglich einer Rotation um 180° um die Symmetrieachse. Dies bedeutet, der Verbindungsleitungsabschnitt unterscheidet sich von einem um die Symmetrieachse um 180° gedrehten Verbindungsleitungsabschnitt nicht.

Bevorzugt ist zum Schutz vor äußeren Einflüssen das wenigstens eine Einzelleitung-Spulenpaar, besonders bevorzugt die gesamte Wicklungsanordnung, in einem Spulengehäuse aufgenommen. Um die Spulen der Wicklungsanordnung, auf welche im Betrieb erhebliche mechanische Kräfte wirken können, möglichst effektiv fixieren zu können, kann gemäß einer vorteilhaften Weiterbildung der vorliegenden Erfindung in dem Spulengehäuse für jedes Einzelleitung-Spulenpaar aus einer Mehrzahl von Einzelleitung-Spulenpaaren je eine Aufnahmekavität ausgebildet sein. In der Aufnahmekavität ist dann das jeweils zugeordnete Einzelleitung-Spulenpaar aufgenommen. Die Aufnahmekavität ist vorzugsweise komplementär zu dem von ihr aufgenommenen Einzelleitung-Spulenpaar ausgebildet, sodass Wandungen der Aufnahmekavität einem ihnen jeweils gegenüberliegenden Außenflächenabschnitt des aufgenommenen Einzelleitung-Spulenpaars spaltfrei oder mit einem geringem Spaltmaß von bevorzugt weniger als 1 mm folgen. Durch das Vorsehen eines Spaltmaßes kann eine thermische Ausdehnung der Spulen im Betrieb berücksichtigt werden. Bezugszustand der Wicklungsanordnung ist ein unbestromter Zustand bei einer Raumtemperatur von 20 °C.

Zu Erleichterung der Montage kann das Spulengehäuse zwei Gehäusebauteile umfassen. Die beiden Gehäusebauteile bilden, miteinander verbunden, das Spulengehäuse. Montageversuche haben gezeigt, dass es für eine effektive, möglichst fehlerfreie einfache Montage bevorzugt ist, wenn von jeder Aufnahmekavität ein Teil als Ausnehmung in dem einen Gehäusebauteil und ein anderer Teil als Ausnehmung in dem anderen Gehäusebauteil ausgebildet ist, wobei die beiden in unterschiedlichen Gehäusebauteilen ausgebildeten Teile ein und derselben Aufnahmekavität bevorzugt unterschiedlich groß sind. So kann ein Einzelleitung-Spulenpaar in die größere Ausnehmung des einen Gehäusebauteils eingelegt werden und steht aus dieser Ausnehmung längs der Spulenpaar-Wicklungsachse hervor, sodass auch das in die größere der beiden die Aufnahmekavität bildende Ausnehmungen eingelegte Einzelleitung-Spulenpaar für den Monteur angreifbar und manipulierbar bleibt. Außerdem wird so ein Spulengehäuse mit höherer Stabilität erhalten als wenn ein Gehäusebauteil das jeweils andere nur als unprofilierte Abdeckung bedecken würde.

Durch Ausbildung auch einer zur Bildung der Aufnahmekavität beitragenden Ausnehmung im anderen Gehäusebauteil ist dessen Anordnung relativ zum einen Gehäusebauteil bei eingelegten Einzelleitung-Spulenpaaren ohne weiteres erkennbar und in der Regel nur in einer einzigen Orientierung möglich, was das Fehlerrisiko in der Montage weiter verringert.

Vorteilhaft reichen die Ausnehmungen von der im verbundenen Zustand gemeinsamen Fügeebene der Gehäusebauteile des Spulengehäuses unterschiedlich tief in die beiden Gehäusebauteile hinein. Die genannte Fügeebene ist der Einfachheit halber bevorzugt zu den parallelen Spulenpaar-Wicklungsachsen orthogonal orientiert. Die Tiefe der größeren der beiden eine Aufnahmekavität bildenden Ausnehmungen ist daher bevorzugt größer als die Dicke einer Spule, ausgewählt aus erster und zweiter Spule, jedoch kleiner als die Dicke des von diesen Spulen gebildeten Einzelleitung-Spulenpaars.

Die Gehäusebauteile können beispielsweise im Spritzgussverfahren hergestellt werden, wobei zur Erhöhung der Bauteilfestigkeit ein faserverstärkter thermoplastischer Kunststoff spritzgusstechnisch verarbeitet werden kann. Ebenso können die Gehäusebauteile durch ein additives Fertigungsverfahren, wie etwa 3D-Druck, hergestellt werden.

Für mechanisch besonders feste Gehäusebauteile kann ein faserverstärkter, bevorzugt glasfaserverstärkter, Duroplast verwendet werden, wobei die Ausnehmungen in die Gehäusebauteile spanend eingearbeitet werden können. Der Duroplast verändert bei der im Betrieb der Wicklungsanordnung zu erwartenden Erwärmung seine Festigkeit nicht oder zumindest deutlich weniger als ein Thermoplast.

Die beiden Gehäusebauteile können unter Zwischenanordnung einer alle im Spulengehäuse aufgenommenen Spulen umgebenden Dichtung miteinander verbunden sein. Der von der Dichtung umgebene Bereich kann außerdem auch die Verbindungsleitungsabschnitte umfassen. Die Dichtung kann als Festkörperdichtung zwischen die Gehäusebauteile eingelegt oder als viskose Dichtung auf wenigstens ein Gehäusebauteil in Gestalt einer Dichtungsraupe aufgetragen werden. Bevorzugt härtet die viskose Dichtung nach ihrem Auftrag, insbesondere nach dem Fügen der Gehäusebauteile zu dem Spulengehäuse, elastisch aus. Bevorzugt ist in wenigstens einem Gehäusebauteil, vorzugsweise in beiden Gehäusebauteilen eine Dichtungskavität zur Aufnahme der Dichtung ausgebildet. Auch die Dichtungskavität kann, wie die Aufnahmekavität, in jedes der beiden Gehäusebauteile unterschiedlich tief hineinragen.

Wie bereits oben erwähnt wurde, kann das Spulengehäuse einen Spulenbereich aufweisen, in welchem die die Einzelleitung-Spulenpaare aufnehmenden Aufnahmekavitäten angeordnet sind. Das Spulengehäuse kann weiter einen dem Spulenbereich benachbarten Anschlussbereich aufweisen, in welchem die Verbindungsleitungsabschnitte angeordnet sind. Der Anschlussbereich kann den oben genannten Verbindungsbereich und den oben genannten Wechselbereich aufweisen. Damit der Spulenbereich für die mit ihm wechselwirkende Magnetanordnung oder Induktionsanordnung mit möglichst geringem Luftspalt einfach zugänglich ist, sind bevorzugt alle Aufnahmekavitäten auf derselben Seite des Anschlussbereichs gelegen.

Da in der Regel nur der Spulenbereich mit der Magnetanordnung bzw. der Induktionsanordnung des Linearmotors wechselwirkt, kann der Spulenbereich zur Erzielung eines möglichst geringen Luftspalts mit geringerer Dicke ausgebildet sein als der Anschlussbereich. Die Dicke ist dabei, wie oben bereits dargelegt, längs der Spulen-Wicklungsachsen bzw. Spulenpaar-Wicklungsachse zu messen.

Auch die vorliegend diskutierte Wicklungsanordnung kann aktiv mit einem strömbaren Kühlmedium zwangskonvektiv gekühlt werden, um Wärme von der Wicklungsanordnung abführen und die Wicklungsanordnung dadurch mit einer höheren elektrischen Leistung belasten zu können. Hierzu kann in dem Spulengehäuse wenigstens ein Kühlkanal ausgebildet sein, in welchen wenigstens jeweils ein Abschnitt eines jeden Einzelleitung-Spulenpaars aus der Mehrzahl von Einzelleitung-Spulenpaaren einragt, so dass die einragenden Abschnitte von einem den Kühlkanal durchströmenden Kühlmedium benetzbar sind. Dadurch können die Einzelleitung-Spulenpaare unmittelbar Wärme an das den Kühlkanal durchströmende Kühlmedium abgeben. Eine derartige Kühlung der Einzelleitung-Spulenpaare erfordert keine oder nur eine vernachlässigbare Vergrößerung der Dickenabmessung des Spulenbereichs der Wicklungsanordnung.

Wenngleich grundsätzlich der Kühlkanal als von den übrigen Ausnehmungen in den Gehäusebauteilen gesonderter Kanal im Spulengehäuse ausgebildet sein kann, ist es doch zur Reduzierung des zur Herstellung des Spulengehäuse notwendigen Aufwands vorteilhaft, wenn die Aufnahmekavitäten einen Abschnitt wenigstens eines Kühlkanals bilden. Bevorzugt ist jede Aufnahmekavität, in welcher ein Einzelleitung-Spulenpaar aufgenommen ist, ein Abschnitt eines von einem Kühlmedium durchströmbaren Kühlkanals.

Um eine Mehrzahl von Aufnahmekavitäten sukzessive mit dem Kühlmedium versorgen zu können, kann die Mehrzahl von Aufnahmekavitäten miteinander durch einen Strömungskanal verbunden sein, durch welchen das Kühlmedium von einer Aufnahmekavität in eine längs der Folgeachse folgende Kavität strömen kann. Somit kann es ausreichen, an einem bezüglich der Folgeachse axialen Längsende des Spulengehäuses Kühlmedium in dieses einzuleiten und am entgegengesetzten axialen Längsende wieder mit höherer Temperatur auszuleiten.

Bevorzugt ist die Aufnahmekavität ringförmig. Der Spulenpaar-Augenbereich kann die miteinander verbundenen radial inneren Spulenenden der ersten und der zweiten Spule aufnehmen und ansonsten mit Material des Spulengehäuses oder mit einem ferromagnetischen Kernmaterial gefüllt sein, so dass für die Aufnahme des Einzelleitung-Spulenpaars im Wesentlichen ein die Füllung des Augenbereichs umgebender Ringraum verbleibt.

Die Zuleitung des Kühlmediums in die Aufnahmekavität erfolgt bevorzugt vom oben genannten Anschlussbereich aus. Um sicher zu gehen, dass das die Aufnahmekavität durchströmende Kühlmedium einen möglichst großflächigen Abschnitt des in die Aufnahmekavität eingelegten Einzelleitung-Spulenpaars benetzt und um einen strömungsmechanischen Kurzschluss zwischen einem zuleitenden und einem ableitenden Strömungskanal zu verhindern, kann ein Einzelleitungs-Spulenpaar mit einer Wandung der ihn aufnehmenden ringförmigen Aufnahmekavität derart nur lokal stoffschlüssig verbunden sein, dass die stoffschlüssige Verbindung eine Strömung von Kühlmedium von einem der Aufnahmekavität Kühlmedium zuführenden Strömungskanal zu einem Kühlmedium aus der Aufnahmekavität wegleitenden Strömungskanal in nur einer Strömungsrichtung längs der ringförmigen Aufnahmekavität zulässt. Die stoffschlüssige Verbindung kann beispielsweise durch ein Verkleben oder lokales Vergießen erreicht werden. So kann beispielsweise die stoffschlüssige Verbindung den Kürzeren von zwei möglichen Verbindungswegen zwischen einem zuführenden und einem abführenden Strömungskanal unterbrechen, sodass die Aufnahmekavität durchströmendes Kühlmedium stets entlang des längstmöglichen Strömungswegs zwischen Zuführung und Abführung des Kühlmediums in die Aufnahmekavität bzw. aus dieser strömt.

Nicht nur Einzelleitung-Spulenpaare können in einer jeweils zugeordneten Aufnahmekavität aufgenommen sein, sondern auch die Verbindungsleitungsabschnitte können in eigens dafür ausgebildeten Leitungskavitäten im Spulengehäuse aufgenommen sein. Diese Leitungskavitäten sind wiederum bevorzugt komplementär zu den sie aufnehmenden Verbindungsleitungsabschnitten ausgebildet, sodass der Verlauf der Leitungskavitäten dem Verlauf der darin aufgenommenen Verbindungsleitungsabschnitte im Wesentlichen entspricht. Bevorzugt können zur Reduzierung des Fertigungsaufwands die Leitungskavitäten Teil des Strömungskanals sein. Dann ist in einer bevorzugten Weiterbildung der vorliegenden Erfindung in dem Aufnahmekavitäten miteinander verbindenden Strömungskanal wenigstens ein Verbindungsleitungsabschnitt, vorzugsweise eine Mehrzahl von Verbindungsleitungsabschnitten, aufgenommen. Da die Verbindungsleitungsabschnitte ohnehin zwischen zwei Einzelleitung-Spulenpaaren verlaufen, verlaufen die sie aufnehmenden Leitungskavitäten zwischen zwei Aufnahmekavitäten und verbinden diese fluidmechanisch. Bevorzugt sind dann mehrere mit Kühlmedium belieferte Kühlkanäle im Spulengehäuse ausgebildet, besonders bevorzugt entspricht die Anzahl an Kühlkanälen der Anzahl an elektrischen Phasen, an welche die Wicklungsanordnung anschließbar ist. Am stärksten bevorzugt ist für jeden Phasenstrang ein eigener Kühlkanal ausgebildet.

Das Spulengehäuse kann Montageformationen aufweisen, mittels welcher das Spulengehäuse mit einer Tragstruktur verbindbar ist. Die Tragstruktur ist bevorzugt auch eine Tragstruktur der Spur des unter Verwendung der Wicklungsanordnung angetriebenen und vorzugsweise auch abgebremsten spurgebunden Fahrzeugs. Die oben beschriebene Konstruktion der Wicklungsanordnung und des sie umgebenden Spulengehäuses gestattet eine vorteilhafte Ausbildung der Montageformationen als das Spulengehäuse in Dickenrichtung durchsetzende Durchgangsöffnungen. Auch diese Durchgangsöffnungen können in der oben beschriebenen Weise durch Zwischenanordnung einer Dichtung zwischen den Gehäusebauteilen in einfacher Weise abgedichtet sein. Die Verbindung des Spulengehäuses mit der Tragstruktur ist bevorzugt eine lösbare Verbindung, beispielsweise durch Schrauben oder Schrauben und Muttern.

Die oben beschriebene Verlegung der Verbindungsleitungsabschnitte ermöglicht die Bildung von Bereichen im Anschlussbereich, welche von elektrischen Funktionskomponenten völlig frei sind, sodass bevorzugt dass wenigstens ein Teil der Montageformationen im Anschlussbereich angeordnet oder/und ausgebildet ist.

Dann, wenn wenigstens ein Teil der Montageformationen das Spulengehäuse durchsetzende Durchgangsöffnungen umfasst, kann jede der Durchgangsöffnungen in einem von Verbindungsleitungsabschnitten umgebenen Fensterbereich innerhalb des Anschlussbereichs angeordnet sein. Ein solcher Fensterbereich ist ein von elektrischen Funktionskomponenten freier Bereich.

Ebenso kann ein von elektrischen Leitungen der Spulen und der sie verbindenden Verbindungsleitungsabschnitte freier Bereich des Spulengehäuses zur Aufnahme wenigstens eines Sensors ausgebildet sein. Beispielsweise kann in dem Spulengehäuse wenigstens eine Sensorausnehmung zur Aufnahme eines Sensors, wie etwa eines Temperatursensors, ausgebildet sein. Bevorzugt befindet sich auch die Sensorausnehmung im Anschlussbereich. Eine Signalübertragungsleitung, welche den Sensor mit einer Steuervorrichtung verbindet, kann in einer gesonderten Signalleitungskavität im Spulengehäuse, insbesondere in dessen Anschlussbereich, verlegt sein. Die Signalleitungskavität kann abschnittsweise identisch mit einer oben genannten Leitungskavität zur Aufnahme der Verbindungsleitungsabschnitte sein, sodass abschnittsweise die Signalübertragungsleitung eines Sensors und ein Verbindungsleitungsabschnitt in ein und derselben Kavität im Spulengehäuse verlegt sind. Abschnittsweise, insbesondere im Verbindungsbereich des Spulengehäuses kann die Signalleitungskavität außerhalb der ersten und der zweiten Lage der Spulen vorgesehen sein, um Kollisionen mit den Verbindungsleitungsabschnitten zu vermeiden.

Für die präzise Steuerung des von der Wicklungsanordnung erzeugten Magnetfelds ist die Kenntnis der Position der relativ zur Wicklungsanordnung bewegten Magnetanordnung bzw. Induktionsanordnung oder allgemein des relativ zur Wicklungsanordnung bewegten Fahrzeugs vorteilhaft. Dabei ist vor allem die Kenntnis der Position unmittelbar vor einem Überlappen von Magnetanordnung bzw. Induktionsanordnung einerseits und Wicklungsanordnung andererseits vorteilhaft, um das Magnetfeld der Wicklungsanordnung möglichst passend zur Bewegung der Magnetanordnung bzw. Induktionsanordnung steuern zu können. Vorzugsweise umfasst die Wicklungsanordnung daher eine Sonde zur Erfassung einer Position oder/und Bewegung einer mit der Wicklungsanordnung linearmotorisch wechselwirkenden Magnetanordnung bzw. Induktionsanordnung. Bevorzugt umfasst die Wicklungsanordnung ein Sondengehäuse, in welchem die Sonde aufgenommen ist, und welches mit dem Spulengehäuse verbunden ist. Da die Wicklungsanordnung bevorzugt zur Verwendung in synchronen Linearmotoren konzipiert ist, welche eine eine Mehrzahl von Permanentmagneten aufweisende Magnetanordnung als mit der Wicklungsanordnung wechselwirkendes Linearmotor-Bauteil verwenden, ist die Sonde bevorzugt eine magnetfeldsensitive Sonde, etwa eine Hall-Sonde.

Der Begriff "Sonde" ist dabei gleichbedeutend mit dem Begriff "Sensor" und wird lediglich zur sprachlichen Unterscheidung von dem oben genannten Sensor im Inne-Inneren des Spulengehäuses zur Ermittlung von Betriebsparametern, wie etwa der Temperatur, der Wicklungsanordnung verwendet.

Grundsätzlich kann das Sondengehäuse einstückig mit dem Spulengehäuse verbunden ausgebildet sein. Da jedoch auch mehrere Wicklungsanordnungen in Richtung der Folgeachse hintereinander angeordnet werden können, von welchen nur die in Relativbewegungsrichtung der Magnetanordnung bzw. Induktionsanordnung vorderste und damit als erstes erreichte Wicklungsanordnung eine Positionssonde benötigt, ist das Sondengehäuse bevorzugt bestimmungsgemäß lösbar mit dem Spulengehäuse verbunden.

Zur mechanisch besonders sicheren und dauerhaften lösbaren Verbindung des Sondengehäuses mit dem Spulengehäuse können am Sondengehäuse Befestigungsformationen ausgebildet sein, welche zur Verbindung von Spulengehäuse und Sondengehäuse mit am Spulengehäuse ausgebildeten Befestigungsgegenformationen in Eingriff bringbar sind. Der Eingriff ist bevorzugt ein formschlüssiger Eingriff. Eine Formation aus Befestigungsformation und Befestigungsgegenformation kann ein Vorsprung sein, welcher in eine Ausnehmung, bevorzugt komplementäre Ausbildung, der jeweils anderen Formation eingreift. Um dann, wenn am Spulengehäuse kein Sondengehäuse benötigt wird, unnötig überstehende Bauteilabschnitte am Spulengehäuse zu vermeiden, sind bevorzugt die Befestigungsformationen Vorsprünge und die Befestigungsgegenformationen Ausnehmungen.

Die vorliegende Erfindung wird nachfolgend anhand der beiliegenden Zeichnungen näher erläutert werden. Es stellt dar:
- Fig. 1: eine Draufsicht auf einen erfindungsgemäßen linearmotorischen Stator mit einem Spulengehäuse mit darin aufgenommener Wicklungsanordnung,
- Fig. 2: der Stator von Figur 1 ohne damit verbundenes Sondengehäuse, jedoch montiert an eine Tragstruktur,
- Fig. 3: eine Querschnittsansicht durch den Stator von Figur 2 längs der Schnittebene III-III von Figur 2,
- Fig. 4: der Stator der Figuren 1 bis 3 mit abgenommenem erstem Gehäusebauteil,
- Fig. 5: eine zweite Ausführungsform des Stators von Figur 4 mit mehreren Kühlkanälen und mit Verbindungsleitungsabschnitte aufnehmenden Strömungskanälen und
- Fig. 6: eine dritte Ausführungsform des Stators von Figur 4 ohne Kühlkanal, jedoch mit am Spulengehäuse aufgenommenen Sensoren.

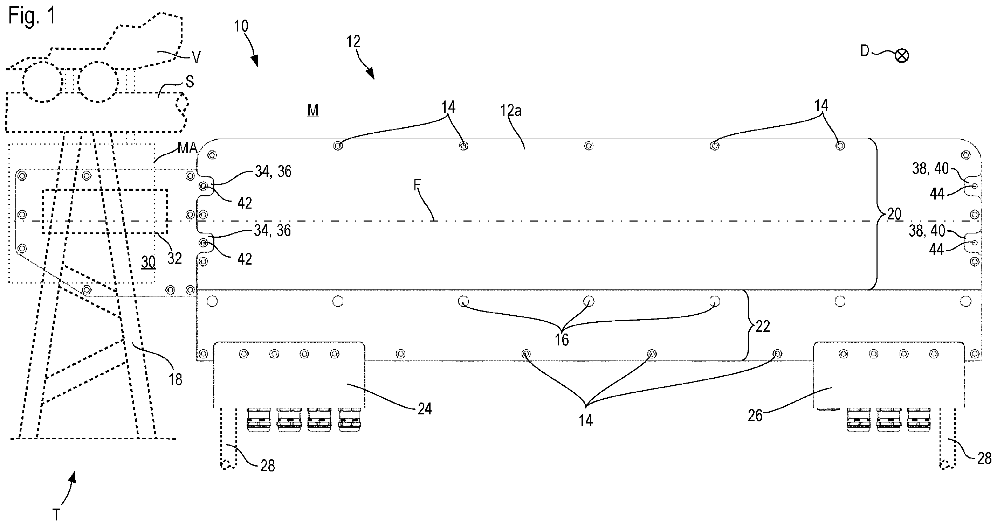

**In** Figur 1 ist ein linearmotorischer Stator 10 in der Draufsicht mit Blickrichtung entlang von Spulen-Wicklungsachsen von im Spulengehäuse 12 aufgenommenen und daher in Figur 1 nicht dargestellten bestrombaren Spulen gezeigt. Die Spulen-Wicklungsachsen verlaufen orthogonal zur Zeichenebene von Figur 1. Eine Folgeachse F längs welcher die einzelnen Spulen als Einzelleitung-Spulenpaare verschaltet aufeinanderfolgend angeordnet sind verläuft parallel zur Zeichenebene von Figur 1.

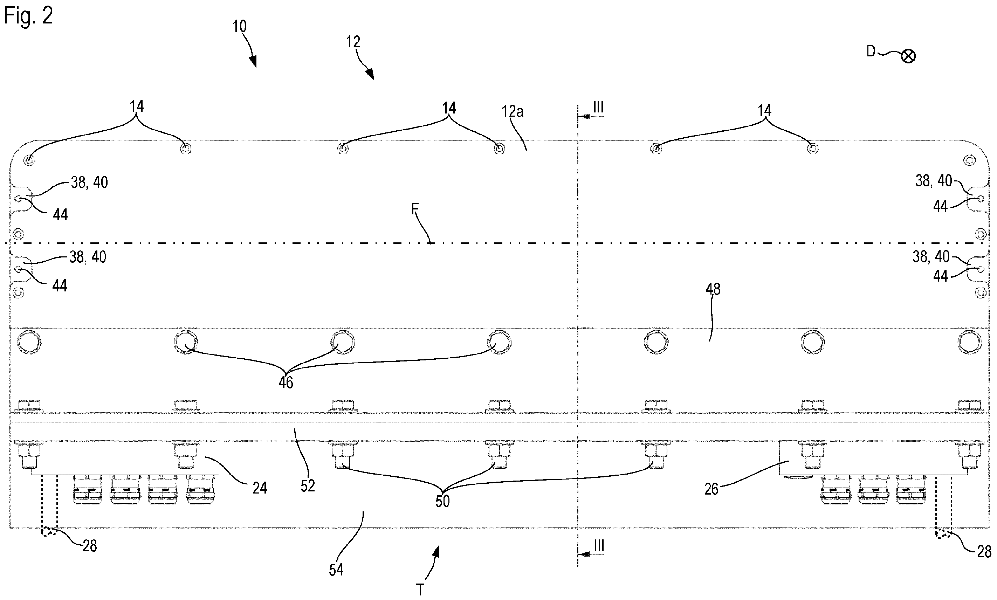

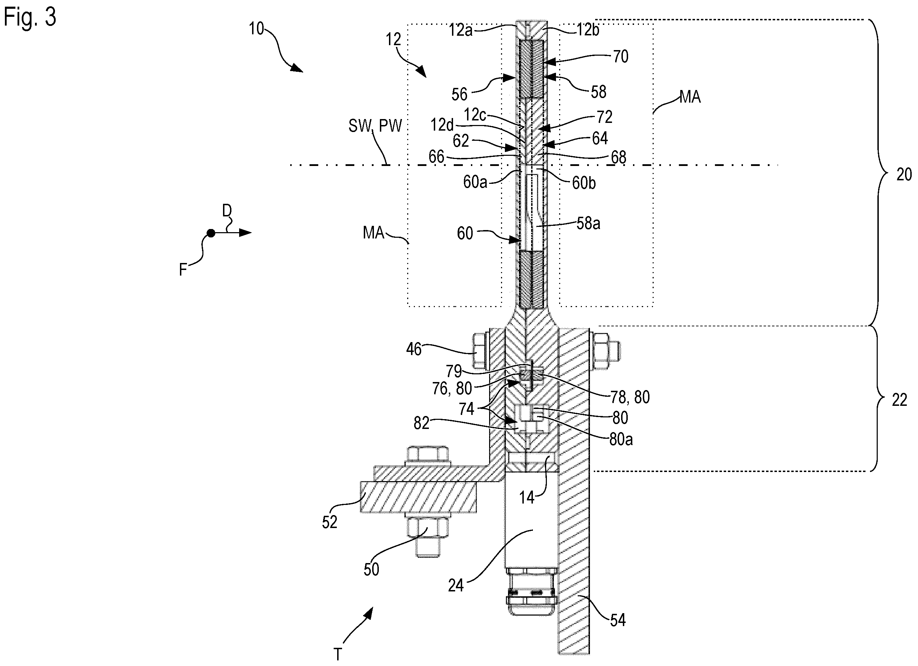

Das Spulengehäuse 12, welches aus Gründen der erzielbaren hohen mechanischen und thermischen Festigkeit bevorzugt aus einem mit einem Glasfasergewebe verstärkten Duroplast, etwa einem Epoxidharz, gebildet ist, umfasst zwei Gehäusebauteile, von welchen der Betrachter der Figuren 1 und 2 auf das in Betrachtungsrichtung vordere, kleinere erste Gehäusebauteil 12a blickt, welches das in den Figuren 1 und 2 dahinterliegende größere zweite Gehäusebauteil 12b (siehe Figuren 3 bis 6) verdeckt.

Längs des Randes des Spulengehäuses 12 ist eine Vielzahl von Durchgangslöchern 14 ausgebildet, welche das Spulengehäuse 12 vollständig durchsetzen und Verbindungsmittel, wie etwa Schrauben-Mutter-Kombinationen, aufnehmen, um die beiden Gehäusebauteile 12a und 12b sicher und bevorzugt bestimmungsgemäß lösbar miteinander zu verbinden. Zur besseren Übersichtlichkeit ist nur ein Teil der Durchgangslöcher 14 mit Bezugszeichen versehen.

Im Spulengehäuse 12, längs der Folgeachse F äquidistant aufeinander folgend, ist eine Mehrzahl von Montagelöchern 16 als Montageformationen ausgebildet, welche das Spulengehäuse 12 ebenfalls in der zur Zeichenebene von Figur 1 orthogonalen und damit zu den Spulen-Wicklungsachsen parallelen Dickenrichtung D vollständig durchsetzen. Die Montagelöcher 16, von welchen ebenfalls der besseren Übersichtlichkeit wegen nur drei von sieben mit Bezugszeichen versehen sind, dienen zur Befestigung des Spulengehäuses 12 bzw. des Stators 10 an einer lediglich strichliniert angedeuteten Tragstruktur T, beispielsweise an einem Fachwerk 18, welches eine Schienenanordnung S zur Führung eines spurgebundenen Fahrzeugs V trägt.

Das Fahrzeug V bewegt sich längs der Folgeachse F am Stator 10 vorbei. In der Regel führt das Fahrzeug V eine Magnetanordnung MA mit, welche eine Mehrzahl von längs der Folgeachse F aufeinander folgenden Permanentmagneten mit alternierender Polarisierung aufweist. Eine solche Magnetanordnung MA bildet zusammen mit dem Stator 10 einen Synchron-Linearmotor. Das Fahrzeug V ist bevorzugt ein Wagen oder ein Zug aus mehreren Wagen eines Fahrgeschäfts, wie beispielsweise einer Achterbahn.

Das Spulengehäuse 12 weist einen Spulenbereich 20 auf, in welchem die Spulen angeordnet sind, und weist einen dem Spulenbereich 20 benachbarten Anschlussbereich 22 auf, in welchem die die einzelnen Spulen verbindenden elektrischen Leitungsabschnitte aufgenommen sind. Da die Magnetanordnung MA des Fahrzeugs V nur mit den Spulen im Spulenbereich 20 Kraft erzeugend wechselwirkt, ist zur Erzielung eines möglichst geringen Luftspalts der Spulenbereich 20 mit geringerer Dicke ausgebildet als der Anschlussbereich 22, auf dessen Dickenabmessung es weniger ankommt. Bevorzugt sind unter anderem wegen der größeren Dicke des Anschlussbereichs 22 und der damit verbundenen höheren Festigkeit dieses Bauteilabschnitts die Montagelöcher 16 im Anschlussbereich 22 angeordnet.

Über längsendseitige Anschlusskästen 24 und 26 können die Spulen im Inneren des Spulengehäuses mit elektrischer Energie versorgt werden. Vorliegend ist der Stator 10 beispielhaft ein dreiphasiger Stator, welcher mit Drehstrom versorgt wird. Der Drehstrom wird zur Steuerung der vom Stator 10 im Zusammenwirken mit der Magnetanordnung MA erzeugten Antriebskraft durch einen nicht dargestellten Frequenzumrichter in an sich bekannter Weise manipuliert.

An dem in Figur 1 linken Anschlusskasten 24 ist zusätzlich zu den drei Zugängen für jeweils eine elektrische Phase ein weiterer Zugang für Signalübertragungsleitungen vorgesehen, welche zu Sensoren führen können, die im Spulengehäuse 12 aufgenommen sind. An beiden Anschlusskästen 24 und 26 ist darüber hinaus noch Raum für eine lediglich strichliniert angedeutete Kühlmedienleitung 28, um Kühlmedium ins Innere des Spulengehäuses 12 zu leiten und wieder aus dem Spulengehäuse 12 auszuleiten und dadurch im Spulengehäuse 12 aufgenommene Spulen konvektiv zu kühlen.

An dem in Figur 1 linken axialen (bezogen auf die Folgeachse F) Längsende ist an das Spulengehäuse 12 ein Sondengehäuse 30 bestimmungsgemäß lösbar montiert, etwa durch Schrauben-Mutter-Kombinationen. Im Sondengehäuse 30 ist im dargestellten Beispiel eine magnetfeldsensitive Sonde 32, etwa eine Hall-Sonde, aufgenommen, welche das Magnetfeld der vom Fahrzeug V mitgeführten Magnetanordnung MA erfasst, daraus die aktuelle Position des Fahrzeugs längs der Schienenanordnung S ermittelt und über eine Signalübertragungsleitung an eine nicht dargestellte Steuervorrichtung überträgt. Die Steuervorrichtung steuert unter Berücksichtigung der von der Sonde 32 ermittelten Fahrzeugposition den die Spulen im Spulengehäuse 12 bestromenden Frequenzumrichter.

Zur einfachen aber sicheren Verbindung mit dem Spulengehäuse 12 weist das Sondengehäuse 30 abstehende Vorsprünge 34 als Befestigungsformationen 36 auf, welche in Ausnehmungen 38 als Befestigungsgegenformationen 40 im Spulengehäuse 12 formschlüssig eingreifen. Die als Ausnehmungen 38 ausgebildeten Befestigungsgegenformationen 40 sind an dem in Figur 1 rechten axialen Längsende des Spulengehäuses 12 erkennbar, an welches kein Sondengehäuse 30 montiert ist.

Die Befestigungsformationen 36 sind jeweils paarweise einander in Dickenrichtung D gegenüberliegend am Sondengehäuse 30 vorgesehen, wobei der in Dickenrichtung zwischen den Befestigungsgegenformationen 40 gelegene Abschnitt des Spulengehäuses 12 zwischen den Befestigungsformationen 36 angeordnet ist. Das Sondengehäuse 30 umgibt daher mit den Befestigungsformationen 36 einen Abschnitt des Spulengehäuses 12 gabelartig. Die Gestalten der Befestigungsformationen 36 und Befestigungsgegenformationen 40 sind zueinander komplementär ausgestaltet, sodass mit der Herstellung des Formschlusseingriffs zwischen den Befestigungsformationen 36 und den Befestigungsgegenformationen 40 auch die relative Lage des Sondengehäuses 30 relativ zum Spulengehäuse 12 im Wesentlichen feststeht. Befestigungsöffnungen 42 in den Befestigungsformationen 36 sowie Befestigungsöffnungen 44 in den Befestigungsgegenformationen 40 fluchten nach Herstellung des Formschlusseingriffs zwischen den Befestigungsformationen 36 und den Befestigungsgegenformationen 40 miteinander, sodass die Befestigungsformationen 36 an den Befestigungsgegenformationen 40 durch bestimmungsgemäß lösbare Verbindungsmittel, wie beispielsweise Schrauben-Mutter-Kombinationen, sicherbar sind.

In den Figuren 2 und 3 ist der Stator 10 ohne Sondengehäuse 30 an die Tragstruktur T montiert dargestellt. Figur 3 ist eine Querschnittansicht des Stators 10 längs der Ebene III-III in Figur 2.

Auf der Seite des ersten Gehäusebauteils 12a ist der Stator 10 mit einer Mehrzahl von Schrauben-Mutter-Kombinationen 46, von welchen die Schrauben die Montagelöcher 16 durchsetzen, an ein Winkelprofil 48 befestigt. Das Winkelprofil 48 ist wiederum mit einer Mehrzahl von Schrauben-Mutter-Kombinationen 50 an einen weiteren Tragkörper 52 montiert.

Auf der Seite des zweiten Gehäusebauteils 12b ist der Stator 10 mit der Mehrzahl von Schrauben-Mutter-Kombinationen 46 an ein Flachprofil 54 montiert. Bevorzugt sind das Winkelprofil 48, der Tragkörper 52 und das Flachprofil 54 Bauteile aus Stahl, wobei auch andere Werkstoffe nicht ausgeschlossen sein sollen.

Wie in Figur 3 zu erkennen ist, sind in dem Spulenbereich 20 mit geringerer Dickenabmessung in Dickenrichtung D eine dem ersten Gehäusebauteil 12a näher gelegene erste Spule 56 und eine dem größeren zweiten Gehäusebauteil 12b näher gelegene zweite Spule 58 im Spulengehäuse 12 aufgenommen. Das Spulengehäuse 12 weist hierzu eine Aufnahmekavität 60 auf, in welcher die erste Spule 56 und die zweite Spule 58 aufgenommen sind.

Bei Bestromung der Spulen 56 und 58 erzeugen diese in an sich bekannter Weise in ihrer Umgebung ein sich zeitlich und örtlich änderndes Magnetfeld M.

Die Aufnahmekavität 60 ist zu einem größeren Teil in dem zweiten Gehäusebauteil 12b ausgebildet und nur zu einem kleineren Teil in dem ersten Gehäusebauteil 12a, was die Montage des Stators 10 erleichtert. Die Aufnahmekavität 60 ist in Dickenrichtung mittig im Spulengehäuse 12 ausgebildet, wohingegen die Fügeebene 12c des ersten und des zweiten Gehäusebauteils 12a bzw. 12b in Dickenrichtung aus der Mitte des Spulengehäuses 12 versetzt angeordnet ist. Die zweite Spule 58 ist daher vollständig in der zur Bildung der Aufnahmekavität 60 beitragenden Ausnehmung 60b im zweiten Gehäusebauteil 12b aufgenommen, während die erste Spule 56 zu einem Teil in der Ausnehmung 60b und zu einem anderen Teil in der zur Bildung der Aufnahmekavität 60 beitragenden Ausnehmung 60a des ersten Gehäusebauteils 12a aufgenommen ist. Hierdurch können die Spulen 56 und 58 zunächst am zweiten Gehäusebauteil 12b angeordnet und nach einer Anordnung manipuliert werden. Das Montieren des ersten Gehäusebauteils 12a mit dem zweiten Gehäusebauteil 12b ergänzt die beiden Ausnehmungen 60a und 60b zur Aufnahmekavität 60 und fixiert die beiden Spulen 56 und 58 im Spulengehäuse 12.

Die erste Spule 56 und die zweite Spule 58 sind um virtuelle kollineare Spulen-Wicklungsachsen SW gewickelt und überlagern sich längs der gemeinsamen Spulen-Wicklungsachsen SW nahezu vollständig. Jede Spule 56 und 58 weist in ihrem radial inneren Bereich einen von Spulenwindungen freien Augenbereich 62 bzw. 64 auf. Die Schnittebene III-III durchsetzt die erste und die zweite Spule 56 bzw. 58 derart zentral, dass die zentral die Augenbereiche 62 und 64 durchsetzend gedachten Spulen-Wicklungsachsen SW in der Schnittebene III-III gelegen sind.

Der Stator 10 weist längs der Folgeachse F hintereinander angeordnet mehrere erste Spulen 56 auf, welche in einer gemeinsamen ersten Spulenlage 66 angeordnet sind. Ebenso weist der Stator 10 längs der Folgeachse F hintereinander angeordnet mehrere zweite Spulen 58 auf, welche in einer gemeinsamen zweiten Spulenlage 68 angeordnet sind. Die beiden Spulenlagen 66 und 68 sind einander längs der Spulen-Wicklungsachsen SW unmittelbar benachbart.

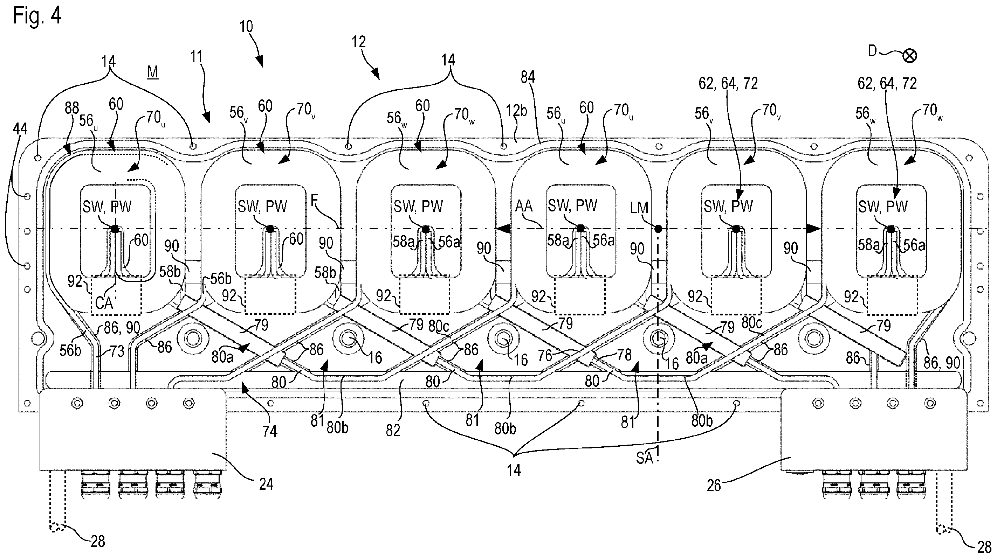

Die erste und die zweite Spule 56 bzw. 58 sind in ihrem radial inneren Randbereich, genauer im gemeinsamen Augenbereich 62 und 64 mit ihren radial inneren Längsenden 56a (siehe Figur 4; das Längsende 56a liegt in Figur 3 unmittelbar vor der Schnittebene III-III) bzw. 58a elektrisch leitend verbunden, sodass die erste Spule 56 und die zweite Spule 58 ein aus einem elektrisch ununterbrochen leitenden elektrischen Leiter gebildetes Einzelleitung-Spulenpaar 70 bilden. Die virtuelle Spulenpaar-Wicklungsachse PW, welche den durch die Augenbereiche 62 und 64 gebildeten Spulenpaar-Augenbereich 72 zentral durchsetzend gedacht ist, ist kollinear mit den Spulen-Wicklungsachsen SW.

Im Anschlussbereich 22 schneidet die Schnittebene III-III in der Schnittebene III-III voneinander getrennt gelegene Bereiche einer Anschlusskavität 74.

In dem oberen Bereich verlaufen zwei elektrische Leiter 76 und 78 unterschiedlicher Verbindungsleitungsabschnitte 80, welche im Spulengehäuse 12 längs der Folgeachse F mit Abstand voneinander angeordnete und zur selben elektrischen Phase gehörende Einzelleitung-Spulenpaare 70 verbinden, von welchen kein Verbindungsleitungsabschnitt 80 mit dem geschnittenen Einzelleitung-Spulenpaar 70 verbunden ist. Die elektrischen Leiter 76 und 78, die in der Schnittebene III-III in Dickenrichtung D nebeneinanderliegen, sind durch eine zwischen ihnen angeordnete elektrisch isolierende Materiallage 79 elektrisch voneinander getrennt.

In dem unteren Bereich der Anschlusskavität 74 ist ein hinter der Schnittebene III-III gelegener Wechselabschnitt 80a eines Verbindungsleitungsabschnitts 80 zu sehen.

In punktierter Linie ist auch die Magnetanordnung MA gezeigt, welche zwei mit Abstand voneinander angeordnete Teilmagnetanordnungen aufweist, wobei im Fahrbetrieb des Fahrzeugs V, bei Betrachtung in einem fahrzeugfesten Koordinatensystem, der Stator 10 durch den zwischen den Teilmagnetanordnungen gebildeten Spalt hindurchbewegt wird.

Figur 4 zeigt den Stator 10 der Figuren 1 bis 3 in der Perspektive von Figur 2, jedoch mit abgenommenem ersten Gehäusebauteil 12a. So ist die Wicklungsanordnung 11 des Stators 10 mit beispielhaft sechs Einzelleitung-Spulenpaaren 70 erkennbar.

Die Wicklungsanordnung 11 ist eine dreiphasige Wicklungsanordnung 11, welche an drei elektrische Phasen u, v und w einer Drehstromversorgung anschließbar ist. Die dreiphasige Ausbildung ist lediglich beispielhaft. Zur Unterscheidung der anschlussgemäßen Zuordnung der einzelnen Einzelleitung-Spulenpaare 70 zu den einzelnen elektrischen Phasen sind die elektrischen Phasen als Index den Bezugszeichen 70 der Einzelleitung-Spulenpaare beigestellt. Wie in Figur 4 zu erkennen ist, sind längs der Folgeachse F keine zwei Einzelleitung-Spulenpaare 70, welche derselben elektrischen Phase zugeordnet sind, einander benachbart. Von beliebig herausgegriffenen drei unmittelbar längs der Folgeachse F aufeinander folgenden Einzelleitung-Spulenpaaren 70 ist das mittlere Einzelleitung-Spulenpaar stets einer anderen elektrischen Phase zugeordnet als das längs der Folgeachse F vorhergehende und das längs der Folgeachse F nachfolgende Einzelleitung-Spulenpaar. Dies gilt im Übrigen auch dann, wenn die Wicklungsanordnung 11 nur zweiphasig ausgebildet wäre.

Der Betrachter von Figur 4 blickt bei Betrachtung der Einzelleitung-Spulenpaare 70 auf diese längs der Spulenpaar-Wicklungsachse PW. Zu erkennen ist jeweils nur die dem Betrachter näher liegende jeweilige erste Spule 56 in der ersten Spulenlage 66, welche die zweite Spule 58 des jeweiligen Einzelleitung-Spulenpaars 70 in der zweiten Spulenlage 68 nahezu vollständig verdeckt. Lediglich die radial inneren Längsenden 58a der zweiten Spulen 58 sind neben den radial inneren Längsenden 56a der ersten Spulen 56 erkennbar, ebenso wie die von den zweiten Spulen 58 wegführenden radial äußeren Anschlussabschnitte 58b. Radial äußere Anschlussabschnitte 56b der ersten Spulen 56 bilden im gezeigten Beispiel die Zuleitung für elektrischen Strom zur ersten Spule 56. Der Übersichtlichkeit halber sind nur die Anschlussabschnitte 56b und 58b für die beiden linken Einzelleitung-Spulenpaare 70 beschriftet.

Wie in Figur 4 am ganz linken Einzelleitung-Spulenpaar 70 angedeutet ist, ist in der Betrachtungsrichtung von Figur 4 die erste Spule 56 im Uhrzeigersinn von radial außen nach radial innen bis zum radial inneren Ende 56a gewickelt. In derselben Betrachtungsrichtung ist die hinter der ersten Spule 56 gelegene zweite Spule 58 im Uhrzeigersinn von radial innen nach radial außen gewickelt. Tatsächlich sind die erste Spule 56 und die zweite Spule 58 eines jeden Einzelleitung-Spulenpaars 70 identisch hergestellt und nur relativ zueinander um eine sowohl zur Folgeachse F als auch zur Spulenpaar-Wicklungsachse PW, welche im dargestellten Beispiel den Spulen-Wicklungsachsen SW entspricht, orthogonale Änderungsachse CA um 180° verdreht angeordnet. Auf diese Weise ist zur Herstellung der Wicklungsanordnung 11 nur eine Bauart von Spulen ausreichend, welche lediglich relativ zueinander entsprechend orientiert angeordnet werden müssen.

Einzelleitung-Spulenpaare 70 derselben elektrischen Phase sind jeweils durch einen Verbindungsleitungsabschnitt 80 elektrisch leitend miteinander verbunden. Dies sei am Beispiel der Phase u erläutert: das in Figur 4 ganz linke Einzelleitung-Spulenpaar 70u ist durch den Anschlussabschnitt 56b durch den Anschlusskasten 24 hindurch mit einer elektrischen Energiequelle, etwa einem Frequenzumrichter, verbunden. Der Anschlussabschnitt 56b befindet sich wie die gesamte erste Spule 56u nur in der ersten Spulenlage 66 (siehe Figur 3).

Durch die Verbindung der radial inneren Längsenden 56a und 58a miteinander ist der Anschlussabschnitt 56b der ersten Spule 56u durch eine einzige elektrische Leitung mit dem Anschlussabschnitt 58b der zweiten Spule 58u verbunden, wobei auch der Anschlussabschnitt 58b, ebenso wie die zweite Spule 58u, nur in der zweiten Spulenlage 68 gelegen ist.

Der Anschlussabschnitt 58b des ganz linken Einzelleitung-Spulenpaars 70u ist Teil eines Verbindungsleitungsabschnitts 80, welcher zunächst mit einem Verbindungsabschnitt 80a in der zweiten Spulenlage 68 in einen Wechselbereich 82 der Anschlusskavität 74 verläuft, wo ein Wechselabschnitt 80b des Verbindungsleitungsabschnitts 80 von der zweiten Spulenlage 68 in die erste Spulenlage 66 verläuft und von dort aus in einem weiteren Verbindungsabschnitt 80c als Anschlussabschnitt 56b zum vierten Einzelleitung-Spulenpaar 70, das ist von links nach rechts das zweite Einzelleitung-Spulenpaar 70u, verläuft. Wiederum sind um der besseren Übersichtlichkeit wegen nicht alle Verbindungsabschnitte 80a und 80c in Figur 4 mit Bezugszeichen versehen. Die Verbindungsleitungsabschnitte 80 sind im Wesentlichen identisch aufgebaut.

Wie in Figur 1 der Übersichtlichkeit wegen nur für die Phase w gezeigt ist, erstrecken sich die Wechselabschnitte 82 aller Verbindungsleitungsabschnitte 80 über die - bezogen auf die Folgeachse F - axiale Längsmitte LM des axialen Abstands AA hinweg, welchen die durch die jeweiligen Verbindungsleitungsabschnitte 80 unmittelbar verbundenen Einzelleitungs-Spulenpaare 70 voneinander haben. Die Wechselabschnitte 82 erstrecken sich zu beiden axialen Seiten der Abstandslängsmitte LM, und zwar besonders bevorzugt gleich weit von der Abstandslängsmitte LM weg. Die von den Einzelleitungs-Spulenpaaren 70 einer Phase zu den sie verbindenden Wechselabschnitten 82 verlaufenden Verbindungsabschnitte 80a und 80c verlaufen geradlinig. Die Verbindungsleitungsabschnitte 80 sind bezüglich einer sowohl zur Folgeachse F als auch zu den Spulenpaar-Wicklungsachsen PW orthogonalen, durch die Abstandslängsmitte LM verlaufende Symmetrieachse SA invariant bezüglich einer Rotation um 180° um die Symmetrieachse SA. Jeder Verbindungsleitungsabschnitt 80 wird daher durch Drehung um die Symmetrieachse um 180° auf sich selbst abgebildet.

Sofern weitere Einzelleitung-Spulenpaare 70 der Phase u vorhanden wären, wären diese in entsprechender Weise über weitere Verbindungsleitungsabschnitte 80 mit den bereits beschriebenen Einzelleitung-Spulenpaaren elektrisch in Reihe verschaltet. In Figur 4 ist jedoch der Anschlussabschnitt 58b des vierten Einzelleitung-Spulenpaars 70 von links über den Anschlusskasten 26 wieder mit der elektrischen Energieversorgung verbunden.

Für die Stränge der jeweils anderen elektrischen Phasen v und w gilt das zur elektrischen Phase u Gesagte entsprechend. Deren Verbindungsleitungsabschnitte 80 sind wie der Verbindungsleitungsabschnitt 80 der elektrischen Phase u ausgebildet.

Die Anschlussabschnitte 56b der ersten Spulen 56 bzw. die Verbindungsabschnitte 80a der Verbindungsleitungsabschnitte 80 haben eine Verlaufskomponente jeweils entlang der Folgeachse F sowie entlang der Änderungsachse CA. Gleiches gilt für die Anschlussabschnitte 58b der zweiten Spulen 58 bzw. die Verbindungsabschnitte 80c der Verbindungsleitungsabschnitte 80, wobei innerhalb eines Verbindungsleitungsabschnitts 80 die Neigung der Anschlussabschnitte 56b und 58b bzw. der Verbindungsabschnitte 80a und 80c relativ zur Folgeachse F um eine zu den Spulenpaar-Wicklungsachse PW orthogonale Neigeachse betragsmäßig gleich groß, jedoch entgegengesetzt gerichtet ist. Vorzugsweise weisen die Verbindungsabschnitte 80c der Verbindungsleitungsabschnitte 80 nur die genannten Verlaufskomponenten auf.

Im Gegensatz zu den Verbindungsabschnitte 80a und 80c eines Verbindungsleitungsabschnitts 80 verlaufen die Wechselabschnitte 80b, vorzugsweise nur, um eine zu den Änderungsachsen CA parallele Neigeachse geneigt, um den Wechsel zwischen der ersten Spulenlage 66 und der zweiten Spulenlage 68 zu bewirken.

Wie Figur 4 zeigt, sind die Montageöffnungen 16 in Fensterbereichen 81 gebildet, die jeweils durch einander kreuzende Verbindungsleitungsabschnitte 80 der drei unterschiedlichen elektrischen Phasen bzw. Phasenstränge gebildet sind. Somit kann eine Montage des Stators 10 an eine Tragstruktur T zum einen mit ausreichender Entfernung von den Einzelleitung-Spulenpaaren 70 und zum anderen mit ausreichender Entfernung vom Rand des Spulengehäuses 12 erfolgen, sodass ohne weitere Hilfsmittel allein durch die Montageöffnung in 16 eine sehr feste Verbindung mit einer Tragstruktur T erzielbar ist.

Das zweite Gehäusebauteil 12b weist eine umlaufende Aufnahmenut 84 zur Aufnahme einer Dichtung auf, welche die Wicklungsanordnung 11 nach radial außen gegenüber dem Fügespalt 12d der Gehäusebauteile 12a und 12b abgedichtet. Eine in der Aufnahmenut 84 aufgenommenen Dichtung kann eine Festkörperdichtung sein, welche in die Aufnahmenut 84 eingelegt wird oder kann eine viskose Dichtung sein, welche als viskose Dichtungsraupe in die Aufnahmenut 84 hinein aufgetragen wird und dann darin aushärtet.

Die Anschlusskavität 74 weist Leitungskavitäten 86 auf, in welchen die Anschlussabschnitte 56b und 58b aufgenommen sind. Die Leitungskavitäten 86 sind zur Minimierung einer Festigkeitsverringerung des Spulengehäuses 12 mit einem geringen Spaltmaß von höchstens 1 mm komplementär zu den darin aufgenommenen elektrischen Leitern 73, 76 und 78 ausgebildet, die auch die Leitungsstränge der elektrischen Phasen u, v und w bilden.

Im Spulengehäuse 12 kann ein Kühlkanal 88 ausgebildet sein, von welchem die Aufnahmekavitäten 60 ein Teil bilden, sodass Kühlmedium in einem Spaltraum zwischen den die Aufnahmekavitäten 60 begrenzenden Wandungen und den in den Aufnahmekavitäten 60 aufgenommenen Einzelleitung-Spulenpaaren 70 strömen kann. Dadurch kann vom Kühlmedium unmittelbar Joule'sche Wärme von den Einzelleitung-Spulenpaaren 70 abgeführt werden.

Durch Strömungskanäle 90 kann das Kühlmedium von einer Aufnahmekavität 60 zu der längs der Folgeachse F unmittelbar benachbarten Aufnahmekavität 60 strömen.

Das Kühlmedium kann über die Kühlmedienleitung 28 durch einen Anschlusskasten 24 oder 26 zugeführt und durch den jeweils anderen Anschlusskasten wieder aus dem Spulengehäuse 12 ausgeleitet werden. Es sei nachfolgend angenommen, dass das Kühlmedium durch die in Figur 4 linke Kühlmedienleitung 28 des Anschlusskastens 24 zugeführt und über die Rechte Kühlmedienleitung 28 des Anschlusskastens 26 wieder ausgeleitet wird.

Die in Figur 4 ganz linke Leitungskavität 86 kann Teil des Kühlkanals 88 sein. Durch diese Leitungskavitäten 86 kann also Kühlmedium, gasförmig oder flüssig oder als Zweiphasenströmung, in die in Figur 4 ganz linke Aufnahmekavität 60 gelangen.

Um sicherzustellen, dass in die Aufnahmekavität 60 eingeleitetes Kühlmedium nicht auf kürzestem Weg zum nächsten Strömungskanal 90 strömt und um dadurch die vom Kühlmedium benetzte Fläche eines jeden Einzelleitung-Spulenpaars 70 möglichst großflächig zu gestalten, können die Einzelleitung-Spulenpaare 70 jeweils nur lokal in einem Bereich 92 spaltfrei und lückenlos mit der sie umgebenden Wandung der Aufnahmekavität 60 durch Klebstoff oder Gießmasse verbunden sein. Zum einen werden so die Einzelleitung-Spulenpaare 70 zusätzlich in ihrer jeweiligen Aufnahmekavität 60 stoffschlüssig fixiert. Zum anderen werden dadurch die kürzeren Verbindungspfade zwischen einer zuleitenden Leitungskavität 86 und einem Strömungskanal 90 oder zwischen einleitenden und einem ableitenden Strömungskanal 90 oder zwischen einem zuleitenden Strömungskanal 90 und einer ausleitenden Leitungskavität 86 strömungstechnisch blockiert, sodass dem Kühlmedium bei der Durchströmung der Aufnahmekavitäten 60 nur der längere Weg zwischen Zuleitung und Ableitung um den Spulenpaar-Augenbereich 72 herum als Strömungsweg zur Verfügung steht.

So kann das Spulengehäuse 12 von Kühlmedium durchströmt werden, wobei gemäß dieser Lösung die längs der Folgeachse F aufeinander folgenden Aufnahmekavitäten 60 einzelnen nacheinander von Kühlmedium durchströmt werden, welches sich längs der Folgeachse F folglich immer stärker erwärmt, sodass der konvektive Wärmetransport bei einer Durchströmung von links nach rechts längs der Durchströmungsrichtung abnimmt.

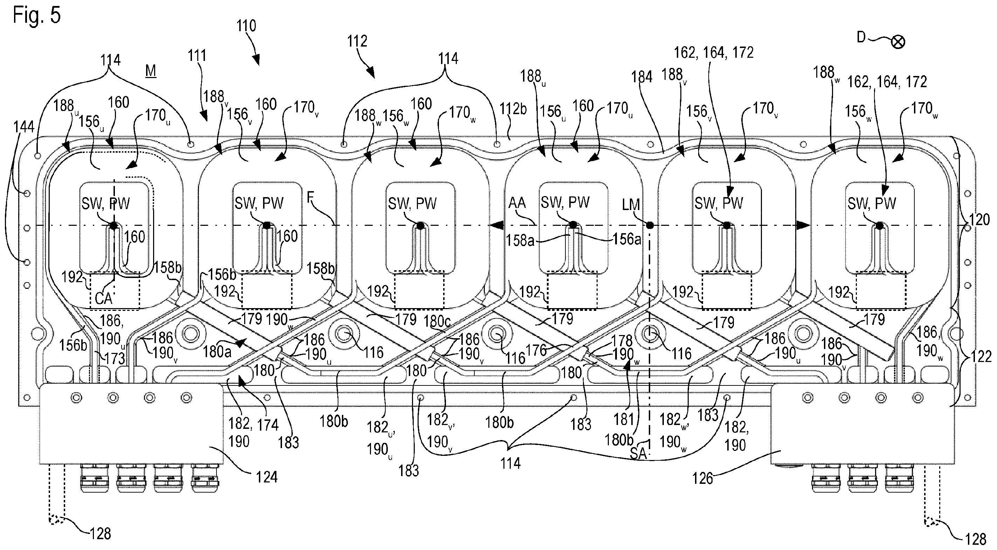

In Figur 5 ist eine zweite Ausführungsform einer Wicklungsanordnung 111 bzw. eines Stators 110 der vorliegenden Erfindung dargestellt. Gleiche und funktionsgleiche Bauteile und Bauteilabschnitte wie in der ersten Ausführungsform der Figuren 1 bis 4 sind in der zweiten Ausführungsform von Figur 5 mit gleichen Bezugszeichen versehen, jedoch erhöht um die Zahl 100. Die zweite Ausführungsform von Figur 5 wird nachfolgend nur insofern beschrieben werden, als sie sich von der ersten Ausführungsform der Figuren 1 bis 4 unterscheidet, auf deren Beschreibung ansonsten auch zur Erläuterung der zweiten Ausführungsform von Figur 5 verwiesen wird.

Der wesentliche Unterschied zwischen der ersten Ausführungsform und der zweiten Ausführungsform von Figur 5 besteht in der Ausgestaltung des Kühlkanals 188. Im Gegensatz zur ersten Ausführungsform folgt in der zweiten Ausführungsform der Figur 5 die Kühlmedienströmung im Inneren des Spulengehäuses 12 vollständig dem Verlauf der elektrischen Leiter 173, 176 und 178. Mithin sind die Leitungskavitäten 186 als Strömungskanäle 190 ausgebildet, oder andersherum ausgedrückt: die Verbindungsleitungsanordnungen 180 sind in Strömungskanälen 190 angeordnet.

Dabei ist jeder elektrischen Phase je ein Kühlkanal 188 zugeordnet, von welchen die Strömungskanäle 190 jeweils ein Teil sind. Einen weiteren Teil eines jeden Kühlkanals 188 bilden weiterhin die Aufnahmekavitäten 160 und außerdem der Wechselbereich 182, der in der zweiten Ausführungsform jedoch durch Unterbrechungen 183 in eine Mehrzahl von Kompartimenten unterteilt ist. In jedem Kühlkanal 188 kann Kühlmedium strömen, ohne eine Kühlmedienströmung in einem Kühlkanal 188 einer anderen elektrischen Phase zu beeinflussen. Zu diesem Zweck können die elektrisch isolierenden Materiallagen 179 die Leitungskavitäten 186, in welchen die elektrischen Leiter 173, 176 und 178 der jeweiligen elektrischen Phasen aufgenommen sind, auch strömungsmechanisch voneinander trennen. Alternativ kann jedoch an den Kreuzungsstellen von Leitungskavitäten 186 unterschiedlicher elektrischer Phasen ein Überströmen von Kühlmedium von der einen Leitungskavität in die jeweils andere Leitungskavität zugelassen sein. Wegen der eindeutigen Zuordnung der Kühlkanäle 188 zu den einzelnen elektrischen Phasen sind die Kühlkanäle in der zweiten Ausführungsform, ebenso wie die Strömungskanäle 190 und die Kompartimente des Wechselbereichs 182 entsprechend ihrer Zuordnung zu elektrischen Phasen mit Indizes u, v und w versehen.

Die für das Kühlmedium Strömungsbarrieren bildenden Unterteilungen 183 des Wechselbereichs 182, welche den Wechselbereich 182 in die Mehrzahl von längs der Folgeachse aufeinander folgenden Kompartimenten unterteilen, sind bevorzugt einstückig mit den Gehäusebauteilen 112a und 112b ausgebildet, können jedoch auch als gesonderte Bauteile in einem zunächst wie in der ersten Ausführungsform längs der Folgeachse F durchgehend ausgebildeten Wechselbereich 82 dichtend angeordnet sein. In einem Kompartiment des Wechselbereichs 182 ist bevorzugt nur genau ein Wechselabschnitt 180b angeordnet.

Die Kühlmedienleitung 128 des Anschlusskastens 124, welche im Ausführungsbeispiel von Fig. 5 beispielhaft die Kühlmedienzufuhrleitung sein soll, beliefert folglich drei Kühlkanäle 188ᵤ, 188ᵥ und 188_{w}. Die Kühlmedienleitung 128 kann daher in drei Unterleitungen unterteilt sein oder die Unterteilung der Kühlmedienzufuhr in einzelne Kühlkanäle erfolgt im Anschlusskasten 124 oder es können drei Kühlmedienleitungen 128 pro Anschlusskasten 124 oder/und 126 vorgesehen sein. Dementsprechend sind bei der zweiten Ausführungsform keine Strömungskanäle vorgesehen, welche von einer Aufnahmekavität 160 zu der längs der Folgeachse F unmittelbar benachbarten Aufnahmekavität 160 führen.

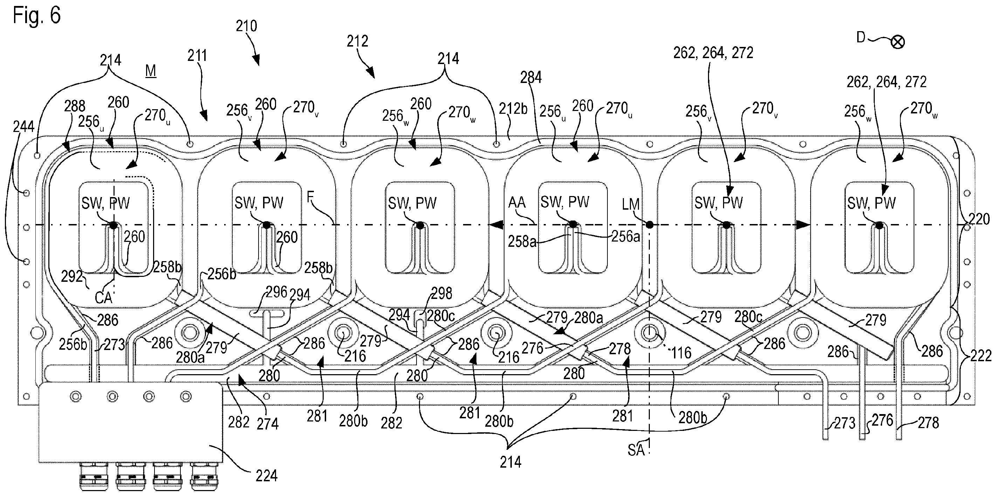

In Figur 6 ist eine dritte Ausführungsform einer Wicklungsanordnung 211 bzw. eines Stators 210 der vorliegenden Erfindung dargestellt. Gleiche und funktionsgleiche Bauteile und Bauteilabschnitte wie in der ersten Ausführungsform der Figuren 1 bis 4 sind in der dritten Ausführungsform von Figur 6 mit gleichen Bezugszeichen versehen, jedoch erhöht um die Zahl 200. Die dritte Ausführungsform von Figur 6 wird nachfolgend nur insofern beschrieben werden, als sie sich von der ersten Ausführungsform der Figuren 1 bis 4 unterscheidet, auf deren Beschreibung ansonsten auch zur Erläuterung der dritten Ausführungsform von Figur 6 verwiesen wird.

Die dritte Ausführungsform des Stators 210 bzw. der Wicklungsanordnung 211 entspricht im Wesentlichen der ersten Ausführungsform, wobei in der dritten Ausführungsform jedoch kein Kühlkanal vorgesehen ist. Dieser kann jedoch vorgesehen sein, und zwar entweder als serieller Kühlkanal wie in der ersten Ausführungsform, gemäß welcher Strömungskanäle 90 jeweils längs der Folgeachse F unmittelbar benachbarte Aufnahmekavitäten 60 miteinander verbinden, oder als mehrere Kühlkanäle, von welchen jeder dem Verlauf eines elektrischen Leiters einer elektrischen Phase folgt.

Dementsprechend ist der Wechselbereich 282 längs der Folgeachse F ununterbrochen ausgebildet, da er nicht zur Leitung einer Kühlmedienströmung vorgesehen ist.

Vom Wechselbereich 282 als einer Leitungskavität 286 der Verbindungsleitungsabschnitte 280 gehen Signalleitungskavitäten 294 ab, welche den Wechselbereich 282 mit Sensorausnehmungen 296 bzw. 298 verbinden, die nahe einer Aufnahmekavität 260 im Anschlussbereich 222, jedoch körperlich getrennt von den Aufnahmekavitäten 260 ausgebildet sind, um Sensoren aufzunehmen, mit denen beispielsweise eine Temperatur des jeweiligen in der Aufnahmekavität 160 aufgenommenen Einzelleitung-Spulenpaars 270 erfasst werden kann. Die Sensorausnehmungen 296 und 298 sind dargestellt, um aufzuzeigen, dass diese beliebige Gestalten aufweisen können, abhängig vom jeweils darin aufzunehmenden Sensor.

In den Signalleitungskavitäten 294 können Signalübertragungsleitungen aufgenommen sein, welche ein Erfassungssignal des jeweils in der zugeordneten Sensorausnehmung 296 bzw. 298 aufgenommenen Sensors zu einer Steuervorrichtung übertragen. Die Signalübertragungsleitungen können über den Wechselbereich 282 und einen der Anschlusskästen 224 oder 226, im dargestellten Beispiel über den Anschlusskasten 224 aus dem Spulengehäuse 212 hinausgeführt sein.

Der Anschlusskasten 226 ist in Figur 6 weggelassen. Man sieht daher die einzelnen elektrischen Leiter 273, 276 und 278 in ihrem Verlauf beim Austritt aus dem Spulengehäuse 212.

Die ersten Spulen 56, 156 bzw. 256 und die zweiten Spulen 58, 158 bzw. 258 sind im dargestellten Beispiel jeweils Flachdrahtspulen mit genau einer Wicklungsebene. Jede Wicklungsebene definiert die Lage 66 bzw. 68 der zugeordneten Mehrzahl an ersten bzw. zweiten Spulen.

## Patentansprüche

1. Linearmotor-Stator (10; 110; 210) mit einer bestrombaren Wicklungsanordnung (11; 111; 211) zur Erzeugung eines sich zeitlich und örtlich ändernden Magnetfeldes (M) in der räumlichen Umgebung der Wicklungsanordnung (11; 111; 211), umfassend eine Mehrzahl von Spulen (56, 58; 156, 158; 256, 258), von welchen jede einen in mehreren Windungen um eine virtuelle Spulen-Wicklungsachse (SW) gewickelten Draht (73, 76, 78; 173, 176, 178; 273, 276, 278) aufweist, wobei die Spulen-Wicklungsachse (SW) einen radial inneren, von Drahtwindungen freien Augenbereich (62, 64; 162, 164; 262, 264) der Spule (56, 58; 156, 158; 256, 258) durchsetzt, wobei die Wicklungsanordnung (11; 111; 211) eine erste Lage (66) von längs einer Folgeachse (F) mit zueinander parallelen Spulen-Wicklungsachsen (SW) überlappungsfrei hintereinander angeordneten ersten Spulen (56; 156; 256) aufweist und eine zweite Lage (68) von längs der Folgeachse (F) mit zueinander parallelen Wicklungsachsen (SW) überlappungsfrei hintereinander angeordneten zweiten Spulen (58; 158; 258) aufweist, wobei die Wicklungsanordnung (11; 111; 211) eine Mehrzahl von längs der Folgeachse (F) hintereinander angeordneten Spulenpaaren (70; 170; 270) mit einer quer zur Folgeachse (F) orientierten virtuellen Spulenpaar-Wicklungsachse (PW) umfasst, von welchen jedes Spulenpaar (70; 170; 270) eine erste Spule (56; 156; 256) und eine zweite Spule (58; 158; 258) mit jeweils zur Spulenpaar-Wicklungsachse (PW) parallelen bzw. kollinearen Spulen-Wicklungsachsen (SW) aufweist, wobei die erste und die zweite Spule (56, 58; 156, 158; 256, 258) bezüglich der Spulenpaar-Wicklungsachse (PW) einander derart axial benachbart angeordnet sind, dass Drahtwindungen der ersten und der zweiten Spule (56, 58; 156, 158; 256, 258) einander axial benachbart sind und dass die Augenbereiche (62, 64; 162, 164; 262, 264) der ersten Spule (56; 156; 256) und der zweiten Spule (58; 158; 258) einander unter Bildung eines gemeinsamen, räumlich zusammenhängenden Spulenpaar-Augenbereichs (72; 172; 272) axial benachbart sind, wobei die Spulenpaar-Wicklungsachse (PW) den Spulenpaar-Augenbereich (72; 172; 272) durchsetzt, wobei wenigstens ein Spulenpaar (70; 170; 270) als Einzelleitung-Spulenpaar (70; 170; 270) ausgebildet ist, bei welchem die erste und die zweite Spule (56, 58; 156, 158; 256, 258) jeweils einen bezüglich der Spulenpaar-Wicklungsachse (PW) radial außen liegenden Anschlussabschnitt (56b, 58b; 156b, 158b; 256b, 258b) zum Anschluss an eine Phase einer Energieversorgung oder an eine weitere Spule (56, 58; 156, 158; 256, 258) aufweisen und im Spulenpaar-Augenbereich (72; 172; 272) miteinander elektrisch leitend verbunden sind,
wobei die Wicklungsanordnung (11; 111; 211) zum Anschluss an eine Energieversorgung mit unterschiedlichen elektrischen Phasen ausgebildet ist, wobei jeder anschließbaren Phase je ein Strang mit jeweils einer Mehrzahl von elektrisch in Reihe verbundenen Einzelleitung-Spulenpaaren (70; 170; 270) zugeordnet ist, wobei die Wicklungsanordnung (11; 111; 211) wenigstens drei längs der Folgeachse (F) unmittelbar aufeinander folgende Einzelleitung-Spulenpaare (70; 170; 270) aufweist, von welchen jedes Einzelleitung-Spulenpaar (70; 170; 270) einer anderen Phase zugeordnet ist als die beiden längs der Folgeachse (F) unmittelbar benachbarten Einzelleitung-Spulenpaare(70; 170; 270), zwischen welchen das Einzelleitung-Spulenpaar (70; 170; 270) angeordnet ist, wobei die Wicklungsanordnung (11; 111; 211) für jede anschließbare elektrische Phase einen Strang mit jeweils einer Mehrzahl von in Reihe geschalteten Einzelleitung-Spulenpaaren (70; 170; 270) aufweist.

2. Linearmotor-Stator (10; 110; 210) mit einer bestrombaren Wicklungsanordnung (11; 111; 211) nach Anspruch 1,
**dadurch gekennzeichnet, dass**, bei Betrachtung des Einzelleitung-Spulenpaars (70; 170; 270) längs der Spulenpaar-Wicklungsachse (PW), die eine Spule (56; 156; 256 oder 58; 158; 258) aus erster (56; 156; 256) und zweiter Spule (58; 158; 258) in einem Wicklungssinn von radial außen nach radial innen gewickelt ist und die jeweils andere Spule (58; 158; 258 oder 56; 156; 256) im selben Wicklungssinn von radial innen nach radial außen gewickelt ist, wobei bevorzugt die erste und die zweite Spule (56, 58; 156, 158; 256, 258) des Einzelleitung-Spulenpaars (70; 170; 270) identisch ausgebildet und relativ zueinander um eine sowohl zur Folgeachse (F) als auch zur Spulenpaar-Wicklungsachse (PW) orthogonale Anordnungsachse (CA) um 180° verdreht angeordnet sind.

3. Linearmotor-Stator (10; 110; 210) mit einer bestrombaren Wicklungsanordnung (11; 111; 211) nach einem der vorhergehenden Ansprüche,
**dadurch gekennzeichnet, dass** das die erste und die zweite Spule (56, 58; 156, 158; 256, 258) des wenigstens einen Einzelleitung-Spulenpaars (70; 170; 270) jeweils Spulen mit nur einer Wicklungsebene sind.

4. Linearmotor-Stator (10; 110; 210) mit einer bestrombaren Wicklungsanordnung (11; 111; 211) nach einem der vorhergehenden Ansprüche,
**dadurch gekennzeichnet, dass** für jeden an eine andere elektrische Phase angeschlossenen Strang mit je einer Mehrzahl von Einzelleitung-Spulenpaaren (70; 170; 270) gilt, dass von in dem Strang längs der Folgeachse (F) unmittelbar aufeinander folgenden Einzelleitung-Spulenpaaren (70; 170; 270) ein radial außen liegender Anschlussabschnitt (58b; 158b; 258b) des einen Einzelleitung-Spulenpaars (70; 170; 270) mit einem radial außen liegenden Anschlussabschnitt (56b; 156b; 256b) des folgenden Einzelleitung-Spulenpaars (70; 170; 270) zu einem die beiden Einzelleitung-Spulenpaare (70; 170; 270) elektrisch leitend verbindenden Verbindungsleitungsabschnitt (80; 180; 280) verbunden ist, wobei der eine Anschlussabschnitt (58b; 158b; 258b) im Lagenbereich einer Lage (68) aus erster (66) und zweiter Lage (68) und der jeweils andere Anschlussabschnitt (56b; 156b; 256b) im Lagenbereich der jeweils anderen Lage (66) aus erster (66) und zweiter Lage (68) gelegen ist.

5. Linearmotor-Stator (10; 110; 210) mit einer bestrombaren Wicklungsanordnung (11; 111; 211) nach Anspruch 4,
**dadurch gekennzeichnet, dass** der Verbindungsleitungsabschnitt (80; 180; 280) von jedem der durch ihn verbundenen Einzelleitung-Spulenpaare (70; 170; 270) in einer anderen Lage (66, 68) von dem jeweiligen Einzelleitung-Spulenpaar (70; 170; 270) weg verläuft und in einem mit Abstand von beiden durch den Verbindungsleitungsabschnitt (80; 180; 280) verbundenen Einzelleitung-Spulenpaaren (70; 170; 270) entfernt gelegenen Wechselabschnitt (82; 182; 282) zwischen den beiden Lagenbereichen verläuft, wobei bevorzugt der Wechselabschnitt (82; 182; 282) wenigstens eines Verbindungsleitungsabschnitts (80; 180; 280) sich beiderseits der - bezogen auf die Folgeachse (F) - axialen Längsmitte (LM) des axialen Abstands (AA) erstreckt, welchen die durch den Verbindungsleitungsabschnitt (80; 180; 280) unmittelbar verbundenen Einzelleitungs-Spulenpaare (70; 170; 270) voneinander haben.

6. Linearmotor-Stator (10; 110; 210) mit einer bestrombaren Wicklungsanordnung (11; 111; 211) nach einem der vorhergehenden Ansprüche,
**dadurch gekennzeichnet, dass** das wenigstens eine Einzelleitung-Spulenpaar (70; 170; 270) in einem Spulengehäuse (12; 112; 212) aufgenommen ist, wobei in dem Spulengehäuse (12; 112; 212) für jedes Einzelleitung-Spulenpaar (70; 170; 270) aus einer Mehrzahl von Einzelleitung-Spulenpaaren (70; 170; 270) je eine Aufnahmekavität (60; 160; 260) ausgebildet ist, in welcher das der Aufnahmekavität (60; 160; 260) zugeordnete Einzelleitung-Spulenpaar (70; 170; 270) aufgenommen ist, wobei bevorzugt das Spulengehäuse (12; 112; 212) zwei Gehäusebauteile (12a, 12b; 112b; 212b) umfasst, welche miteinander verbunden das Spulengehäuse (12; 112; 212) bilden, wobei von jeder Aufnahmekavität (60; 160; 260) ein Teil als Ausnehmung (60a) in dem einen Gehäusebauteil (12a) und ein anderer Teil als Ausnehmung (60b; 160b; 260b) in dem anderen Gehäusebauteil (12b; 112b; 212b) ausgebildet ist, wobei die beiden in unterschiedlichen Gehäusebauteilen (12a, 12b; 112b; 212b) ausgebildeten Teile ein und derselben Aufnahmekavität (60; 160; 260) unterschiedlich groß sind, insbesondere von der im verbundenen Zustand gemeinsamen, zu den parallelen Spulenpaar-Wicklungsachsen (PW) bevorzugt orthogonale, Fügeebene unterschiedlich tief in die beiden Gehäusebauteile (12a, 12b; 112b; 212b) hineinreichen.

7. Linearmotor-Stator (10; 110; 210) mit einer bestrombaren Wicklungsanordnung (11; 111; 211) nach Anspruch 6, unter Einbeziehung des Anspruchs 5, **dadurch gekennzeichnet, dass** das Spulengehäuse (12; 112; 212) einen Spulenbereich (20; 120; 220) aufweist, in welchem die die Einzelleitung-Spulenpaare (70; 170; 270) aufnehmenden Aufnahmekavitäten (60; 160; 260) angeordnet sind, und einen dem Spulenbereich (20; 120; 220) benachbarten Anschlussbereich (22; 122; 222) aufweist, in welchem die Verbindungsleitungsabschnitte (80; 180; 280) angeordnet sind, wobei bevorzugt alle Aufnahmekavitäten (60; 160; 260) auf derselben Seite des Anschlussbereichs (22; 122; 222) gelegen sind.

8. Linearmotor-Stator (10; 110) mit einer bestrombaren Wicklungsanordnung (11; 111) nach einem der Ansprüche 6 bis 7,
**dadurch gekennzeichnet, dass** in dem Spulengehäuse (12; 112) wenigstens ein Kühlkanal (88; 188) ausgebildet ist, in welchen wenigstens jeweils ein Abschnitt eines jeden Einzelleitung-Spulenpaars (70; 170) aus der Mehrzahl von Einzelleitung-Spulenpaaren (70; 170) einragt, so dass die einragenden Abschnitte von einem den Kühlkanal (88; 188) durchströmenden Kühlmedium benetzbar sind, wobei bevorzugt die Aufnahmekavitäten (60; 160) einen Abschnitt wenigstens eines Kühlkanals (88; 188) bilden, wobei besonders bevorzugt eine Mehrzahl von Aufnahmekavitäten (60; 160) miteinander durch einen Strömungskanal (90; 190) verbunden sind, durch welchen das Kühlmedium von einer Aufnahmekavität (60; 160) in eine längs der Folgeachse (F) folgende Aufnahmekavität (60; 160) strömen kann.

9. Linearmotor-Stator (10; 110) mit einer bestrombaren Wicklungsanordnung (11; 111) nach Anspruch 8,
**dadurch gekennzeichnet, dass** ein Einzelleitungs-Spulenpaar (70; 170) mit einer Wandung der ihn aufnehmenden ringförmigen Aufnahmekavität (60; 160) derart nur lokal stoffschlüssig verbunden ist, dass die stoffschlüssige Verbindung eine Strömung von Kühlmedium von einem der Aufnahmekavität (60; 160) Kühlmedium zuführenden Strömungskanal (90; 90) zu einem Kühlmedium aus der Aufnahmekavität (60; 160) wegleitenden Strömungskanal (90; 190) in nur einer Strömungsrichtung längs der ringförmigen Aufnahmekavität (60; 160) zulässt.

10. Linearmotor-Stator (110) mit einer bestrombaren Wicklungsanordnung (111) nach Anspruch 8, unter Einbeziehung eines der Ansprüche 4 bis 5,
**dadurch gekennzeichnet, dass** in dem Aufnahmekavitäten (160) miteinander verbindenden Strömungskanal (190) wenigstens ein Verbindungsleitungsabschnitt (180), vorzugsweise eine Mehrzahl von Verbindungsleitungsabschnitten (180), aufgenommen ist.

11. Linearmotor-Stator (10; 110; 210) mit einer bestrombaren Wicklungsanordnung (11; 111; 211) nach einem der Ansprüche 6 bis 10,
**dadurch gekennzeichnet, dass** das Spulengehäuse (12; 112; 212) Montageformationen (16; 116; 216), insbesondere das Spulengehäuse (12; 112; 212) durchsetzende Durchgangsöffnungen (16; 116; 216) aufweist, mittels welcher das Spulengehäuse (12; 112; 212), vorzugsweise lösbar, mit einer Tragstruktur (T) verbindbar ist.

12. Linearmotor-Stator (10; 110; 210) mit einer bestrombaren Wicklungsanordnung (11; 111; 211) nach Anspruch 11, unter Einbeziehung des Anspruchs 7, **dadurch gekennzeichnet, dass** wenigstens ein Teil der Montageformationen (16; 116; 216) im Anschlussbereich (22; 122; 222) angeordnet oder/und ausgebildet ist, wobei bevorzugt wenigstens ein Teil der Montageformationen (16; 116; 216) das Spulengehäuse (12; 112; 212) durchsetzende Durchgangsöffnungen (16; 116; 216) umfassen, wobei jede der Durchgangsöffnungen (16; 116; 216) in einem von Verbindungsleitungsabschnitten (80; 180; 280) umgebenen Fensterbereich (81; 181; 281) angeordnet ist.

13. Linearmotor-Stator (210) mit einer bestrombaren Wicklungsanordnung (211) nach einem der Ansprüche 6 bis 12,
**dadurch gekennzeichnet, dass** in dem Spulengehäuse (212) wenigstens eine Sensorausnehmung (296, 298) zur Aufnahme eines Sensors, wie beispielsweise Temperatursensor, ausgebildet ist.

14. Linearmotor-Stator (110) mit einer bestrombaren Wicklungsanordnung (11) nach einem der Ansprüche 6 bis 13,
**dadurch gekennzeichnet, dass** sie ein Sondengehäuse (30) umfasst, in welchem eine Sonde (32), insbesondere eine magnetfeldsensitive Sonde (32), aufgenommen ist, wobei das Sondengehäuse (30) mit dem Spulengehäuse (12) verbunden ist, wobei bevorzugt das Sondengehäuse (30) bestimmungsgemäß lösbar mit dem Spulengehäuse (12) verbunden ist, wobei bevorzugt am Sondengehäuse (30) Befestigungsformationen (36) ausgebildet sind, welche zur Verbindung von Spulengehäuse (12) und Sondengehäuse (30) mit am Spulengehäuse (12) ausgebildeten Befestigungsgegenformationen (40) in Eingriff bringbar sind.

## Claims

1. Linear motor stator (10; 110; 210) with a conductive winding arrangement (11; 111; 211) for generating a temporally and spatially varying magnetic field (M) in the spatial neighborhood of the winding arrangement (11; 111; 211), comprising a plurality of coils (56, 58; 156, 158; 256, 258), of which each exhibits a wire (73, 76, 78; 173, 176, 178; 273, 276, 278) wound in several turns around a virtual coil winding axis (SW), where the coil winding axis (SW) penetrates through a radially interior eye region (62, 64; 162, 164; 262, 264) free from wire turns of the coil (56, 58; 156, 158; 256, 258), where the winding arrangement (11; 111; 211) exhibits a first layer (66) of first coils (56; 156; 256) arranged one after another without overlapping along a sequence axis (F) with coil winding axes (SW) parallel to each other and a second layer (68) of second coils (58; 158; 258) arranged one after another without overlapping along the sequence axis (F) with winding axes (SW) parallel to each other, where the winding arrangement (11; 111; 211) comprises a plurality of coil pairs (70; 170; 270) arranged one after another along the sequence axis (F) with a virtual coil pair winding axis (PW) oriented transversely to the sequence axis (F), of which every coil pair (70; 170; 270) exhibits a first coil (56; 156; 256) and a second coil (58; 158; 258). each with a coil winding axis (SW) parallel to or collinear with the coil pair winding axis (PW), where the first and the second coil (56, 58; 156, 158; 256, 258) are arranged axially adjacent to each other relative to the coil pair winding axis (PW) in such a way that wire turns of the first and of the second coil (56, 58; 156, 158; 256, 258) are axially adjacent to each other and the eye regions (62, 64; 162, 164; 262, 264) of the first coil (56; 156; 256) and of the second coil (58; 158; 258) are axially adjacent to each other while forming a common, spatially continuous coil-pair eye region (72; 172; 272), where the coil pair winding axis (PW) penetrates through the coil-pair eye region (72; 172; 272), wherein at least one coil pair (70; 170; 270) is configured as a single conductor coil pair (70; 170; 270), in which the first and the second coil (56, 58; 156, 158; 256, 258) each exhibit a connecting section (56b, 58b; 156b, 158b; 256b, 258b) lying radially outside relative to the coil pair winding axis (PW) for connecting to a phase of a power supply or to a further coil (56, 58; 156, 158; 256, 258) and are connected to each other electroconductively in the coil-pair eye region (72; 172; 272),
wherein the winding arrangement (11; 111; 211) is configured for connecting to a power supply with different electrical phases, where each connectable phase is assigned one strand each with a plurality of single conductor coil pairs (70; 170; 270) connected electrically in series, where the winding arrangement (11; 111; 211) exhibits at least three single conductor coil pairs (70; 170; 270) following each other immediately along the sequence axis (F), of which every single conductor coil pair (70; 170; 270) is assigned to a different phase than the two immediately adjacent single conductor coil pairs (70; 170; 270) along the sequence axis (F) between which the single conductor coil pair (70; 170; 270) is arranged, wherein the winding arrangement (11; 111; 211) contains a strand with a respective plurality of single conductor coil pairs (70; 170; 270) connected electrically in series for each connectable electrical phase.

2. Linear motor stator (10; 110; 210) with a conductive winding arrangement (11; 111; 211) according to Claim 1,
**Characterized in that** when regarding the single conductor coil pair (70; 170; 270) along the coil pair winding axis (PW), one coil (56; 156; 256 or 58; 158; 258) out of first (56; 156; 256) and second coil (58; 158; 258) is wound in one winding direction from radially outside towards radially inside and the respective other coil (58; 158; 258 or 56; 156; 256) is wound in the same winding direction from radially inside towards radially outside, wherein preferably the first and the second coil (56, 58; 156, 158; 256, 258) of the single conductor coil pair (70; 170; 270) are configured identically and are arranged rotated by 180° relative to each other about an arrangement axis (CA) orthogonal both to the sequence axis (F) and to the coil pair winding axis (PW).

3. Linear motor stator (10; 110; 210) with a conductive winding arrangement (11; 111; 211) according to one of the preceding claims,
**Characterized in that** the first and the second coil (56, 58; 156, 158; 256, 258) of the at least one single conductor coil pair (70; 170; 270) are each coils with only one winding plane.

4. Linear motor stator (10; 110; 210) with a conductive winding arrangement (11; 111; 211) according to one of the preceding claims,
**Characterized in that** for every strand connected to a different electrical phase each with a plurality of single conductor coil pairs (70; 170; 270), it is the case that of single conductor coil pairs (70; 170; 270) following each other immediately along the sequence axis (F) in the strand, a radially outside located connecting section (58b; 158b; 258b) of the one single conductor coil pair (70; 170; 270) with a radially outside located connecting section (56b; 156b; 256b) of the following single conductor coil pair (70; 170; 270) is connected to a connecting conductor section (80; 180; 280) electroconductively connecting the two single conductor coil pairs (70; 170; 270), where the one connecting section (58b; 158b; 258b) is located in the layer region of one layer (68) out of first (66) and second layer (68) and the respective other connecting section (56b; 156b; 256b) is located in the layer region of the respective other layer (66) out of first (66) and second layer (68).

5. Linear motor stator (10; 110; 210) with a conductive winding arrangement (11; 111; 211) according to Claim 4,
**Characterized in that** the connecting conductor section (80; 180; 280) proceeds away from each of the single conductor coil pairs (70; 170; 270) connected by it in a different layer (66, 68) than the respective single conductor coil pair (70; 170; 270) and proceeds in a changeover section (82; 182; 282) between the two layer regions located at a distance from the two single conductor coil pairs (70; 170; 270) connected by the connecting conductor section (80; 180; 280), wherein preferably the changeover section (82; 182; 282) of at least one connecting conductor section (80; 180; 280) extends on both sides of the - relative to the sequence axis (F) - axial longitudinal middle (LM) of the axial distance (AA) between the single conductor coil pairs (70; 170; 270) connected directly by the connecting conductor section (80; 180; 280).

6. Linear motor stator (10; 110; 210) with a conductive winding arrangement (11; 111; 211) according to one of the preceding claims,
**Characterized in that** the at least one single conductor coil pair (70; 170; 270) is accommodated in a coil housing (12; 112; 212), where in the coil housing (12; 112; 212) for each single conductor coil pair (70; 170; 270) out of a plurality of single conductor coil pairs (70; 170; 270) there is configured one accommodating cavity (60; 160; 260) in which the single conductor coil pair (70; 170; 270) assigned to the accommodating cavity (60; 160; 260) is accommodated, wherein preferably the coil housing (12; 112; 212) comprises two housing components (12a, 12b; 112b; 212b) which connected with each other form the coil housing (12; 112; 212), where of each accommodating cavity (60; 160; 260) one part is configured as a recess (60a) in the one housing component (12a) and another part as a recess (60b; 160b; 260b) in the other housing component (12b; 112b; 212b), where the two parts of one and the same accommodating cavity (60; 160; 260) configured in different housing components (12a, 12b; 112b; 212b) differ in size, in particular reach to different depths into the two housing components (12a, 12b; 112b; 212b) from the joint plane which is common to them in the connected state and is preferably orthogonal to the parallel coil pair winding axes (PW).

7. Linear motor stator (10; 110; 210) with a conductive winding arrangement (11; 111; 211) according to Claim 6, taking into account Claim 5,
**Characterized in that** the coil housing (12; 112; 212) exhibits a coil region (20; 120; 220), in which the accommodating cavities (60; 160; 260) that accommodate the single conductor coil pairs (70; 170; 270) are arranged, and a connection area (22; 122; 222) adjacent to the coil region (20; 120; 220) in which the connecting conductor sections (80; 180; 280) are arranged, where preferably all the accommodating cavities (60; 160; 260) are located on the same side of the connection area (22; 122; 222).

8. Linear motor stator (10; 110; 210) with a conductive winding arrangement (11; 111) according to one of the Claims 6 to 7,
**Characterized in that** in the coil housing (12; 112) at least one cooling duct (88; 188) is configured into each of which at least one section of every single conductor coil pair (70; 170) from the number of single conductor coil pairs (70; 170) protrudes, such that the protruding sections are wettable by a cooling medium flowing through the cooling duct (88; 188), wherein preferably the accommodating cavities (60; 160) form a section of at least one cooling duct (88; 188), wherein particularly preferably a plurality of accommodating cavities (60; 160) are connected with each other by a flow duct (90; 190), through which the cooling medium can flow from an accommodating cavity (60; 160) into an accommodating cavity (60; 160) following it along the sequence axis (F).

9. Linear motor stator (10; 110; 210) with a conductive winding arrangement (11; 111) according to Claim 8,
**Characterized in that** a single conductor coil pair (70; 170) is connected to a wall of the annular accommodating cavity (60; 160) accommodating it in such an only locally firmly bonded manner that the firmly bonded connection allows flow of cooling medium from a flow duct (90; 90) supplying cooling medium to the accommodating cavity (60; 160) to a flow duct (90; 190) discharging cooling medium away from the accommodating cavity (60; 160) in only one flow direction along the annular accommodating cavity (60; 160).

10. Linear motor stator (10; 110; 210) with a conductive winding arrangement (111) according to Claim 8, taking into account one of the Claims 4 to 5,
**Characterized in that** in the flow duct (190) connecting accommodating cavities (160) with each other there is accommodated at least one connecting conductor section (180), preferably a plurality of connecting conductor sections (180).

11. Linear motor stator (10; 110; 210) with a conductive winding arrangement (11; 111; 211) according to one of the Claims 6 to 10,
**Characterized in that** the coil housing (12; 112; 212) exhibits **mounting formations** (16; 116; 216), in particular **through-holes** (16; 116; 216) penetrating through the coil housing (12; 112; 212), by means of which the coil housing (12; 112; 212) can be connected, preferably detachably, with a supporting structure (T).

12. Linear motor stator (10; 110; 210) with a conductive winding arrangement (11; 111; 211) according to Claim 11, taking into account Claim 7,
**Characterized in that** at least one part of the mounting formations (16; 116; 216) is arranged and/or configured in the connection area (22; 122; 222), wherein preferably at least some of the mounting formations (16; 116; 216) comprise through-holes (16; 116; 216) penetrating through the coil housing (12; 112; 212), where each of the through-holes (16; 116; 216) is arranged in a window region (81; 181; 281) surrounded by connecting conductor sections (80; 180; 280).

13. Linear motor stator (10; 110; 210) with a conductive winding arrangement (211) according to one of the Claims 6 to 12,
**Characterized in that** in the coil housing (212) at least one sensor recess (296, 298) is configured for accommodating a sensor, such as for example a temperature sensor.

14. Linear motor stator (10; 110; 210) with a conductive winding arrangement (11) according to one of the Claims 6 to 13,
**Characterized in that** it comprises a probe housing (30), in which a probe (32), in particular a magnetic field-sensitive probe (32), is accommodated, where the probe housing (30) is connected with the coil housing (12), wherein preferably the probe housing (30) is connected as per intended use detachably with the coil housing (12), where preferably at the probe housing (30) there are configured fastening formations (36) which can be made to engage with fastening counter-formations (40) configured at the coil housing (12) for connecting the coil housing (12) and the probe housing (30).

## Revendications

1. Stator de moteur linéaire (10 ; 110 ; 210) avec un agencement d'enroulement (11 ; 111 ; 211) pouvant être alimenté en courant pour générer un champ magnétique (M) variant dans le temps et dans l'espace dans l'environnement spatial de l'agencement d'enroulement (11 ; 111 ; 211), comprenant une pluralité de bobines (56, 58 ; 156, 158 ; 256, 258), dont chacune présente un fil (73, 76, 78 ; 173, 176, 178 ; 273, 276, 278) enroulé en plusieurs spires autour d'un axe d'enroulement de bobine virtuel (SW), l'axe d'enroulement de bobine (SW) traversant une zone d'oeil (62, 64 ; 162, 164 ; 262, 264) radialement intérieure, exempte de spires de fil, de la bobine (56, 58 ; 156, 158 ; 256, 258), l'agencement d'enroulement (11 ; 111 ; 211) présente une première couche (66) de premières bobines (56 ; 156 ; 256) disposées les unes derrière les autres sans se chevaucher le long d'un axe de succession (F) avec des axes d'enroulement de bobines (SW) parallèles les uns aux autres et présente une deuxième couche (68) de deuxièmes bobines (58 ; 158 ; 258) disposées les unes derrière les autres sans se chevaucher le long de l'axe de succession (F) avec des axes d'enroulement (SW) parallèles les uns aux autres, l'agencement d'enroulement (11 ; 111 ; 211) comprend une pluralité de paires de bobines (70 ; 170 ; 270) disposées les unes derrière les autres le long de l'axe de succession (F) avec un axe d'enroulement virtuel de paire de bobines (PW) orienté transversalement à l'axe de succession (F), dont chaque paire de bobines (70 ; 170 ; 270) comprend une première bobine (56 ; 156 ; 256) et une deuxième bobine (58 ; 158 ; 258) avec respectivement des axes d'enroulement de bobines (SW) parallèles ou colinéaires à l'axe d'enroulement de paire de bobines (PW), la première et la deuxième bobines (56, 58 ; 156, 158 ; 256, 258) étant agencées axialement de manière adjacente l'une à l'autre par rapport à l'axe d'enroulement de la paire de bobines (PW) de telle sorte que les spires de fil de la première et de la deuxième bobines (56, 58 ; 256, 258) sont axialement adjacentes l'une à l'autre et que les zones d'oeil (62, 64 ; 162, 164 ; 262, 264) de la première bobine (56 ; 156 ; 256) et de la deuxième bobine (58 ; 158 ; 258) sont axialement adjacentes l'une à l'autre en formant une zone d'oeil de paire de bobines commune et contiguë dans l'espace (72 ; 172 ; 272), l'axe d'enroulement de la paire de bobines (PW) traversant la zone d'oeil (72 ; 172 ; 272) de la paire de bobines, au moins une paire de bobines (70 ; 170 ; 270) étant conçue comme une paire de bobines à ligne unique (70 ; 170 ; 270), dans laquelle la première et la deuxième bobines (56, 58 ; 156, 158 ; 256, 258) présentent chacune une section de raccordement (56b, 58b ; 156b, 158b ; 256b, 258b) située radialement à l'extérieur par rapport à l'axe d'enroulement de la paire de bobines (PW) pour le raccordement à une phase d'une alimentation en énergie ou à une autre bobine (56, 58 ; 156, 158 ; 256, 258) et sont connectées l'une à l'autre de manière électriquement conductrice dans la zone d'œil de la paire de bobines (72 ; 172 ; 272),
l'agencement d'enroulement (11 ; 111 ; 211) étant conçu pour le raccordement à une alimentation en énergie avec différentes phases électriques, à chaque phase pouvant être raccordée étant associée une branche avec respectivement une pluralité de paires de bobines de ligne individuelle (70 ; 170 ; 270) reliées électriquement en série, l'agencement d'enroulement (11 ; 111 ; 211) comportant au moins trois paires de bobines de ligne individuelle (70 ; 170 ; 270), dont chaque paire de bobines de ligne unique (70 ; 170 ; 270) est associée à une autre phase que les deux paires de bobines de ligne unique (70 ; 170 ; 270) directement adjacentes le long de l'axe de succession (F), entre lesquelles la paire de bobines de ligne unique (70 ; 170 ; 270) est disposée, l'agencement d'enroulement (11 ; 111 ; 211) présentant, pour chaque phase électrique pouvant être raccordée, une branche avec respectivement une pluralité de paires de bobines de ligne unique (70 ; 170 ; 270) montées en série.

2. Stator de moteur linéaire (10 ; 110 ; 210) avec un agencement d'enroulement (11 ; 111 ; 211) pouvant être alimenté en courant selon la revendication 1, **caractérisé en ce que**, en observant la paire de bobines de ligne unique (70 ; 170 ; 270) le long de l'axe d'enroulement de la paire de bobines (PW), une bobine (56 ; 156 ; 256 ou 58 ; 158 ; 258) de la première (56 ; 156 ; 256) et de la deuxième bobine (58 ; 158 ; 258) est enroulée dans un sens d'enroulement de l'extérieur radialement vers l'intérieur radialement et l'autre bobine respective (58 ; 158 ; 258 ou 56 ; 156 ; 256) est enroulée dans le même sens d'enroulement, de l'intérieur vers l'extérieur, de préférence la première et la deuxième bobine (56, 58 ; 156, 158 ; 256, 258) de la paire de bobines de ligne unique (70 ; 170 ; 270) sont identiques et sont agencées l'une par rapport à l'autre avec une rotation de 180° autour d'un axe d'agencement (CA) orthogonal à la fois à l'axe de succession (F) et à l'axe d'enroulement de la paire de bobines (PW).

3. Stator de moteur linéaire (10 ; 110 ; 210) comportant un agencement d'enroulement (11 ; 111 ; 211) pouvant être alimenté en courant selon l'une des revendications précédentes,
**caractérisé en ce que** la première et la deuxième bobines (56, 58 ; 156, 158 ; 256, 258) de la au moins une paire de bobines à ligne unique (70 ; 170 ; 270) sont chacune des bobines à un seul plan d'enroulement.

4. Stator de moteur linéaire (10 ; 110 ; 210) comportant un agencement d'enroulement (11 ; 111 ; 211) pouvant être alimenté en courant selon l'une des revendications précédentes,
**caractérisé en ce que**, pour chaque branche raccordée à une autre phase électrique et comportant une pluralité de paires de bobines de ligne unique (70 ; 170 ; 270), une section de raccordement radialement extérieure (58b ; 158b ; 258b) d'une paire de bobines de ligne unique (70 ; 170 ; 270) se suivant directement dans la branche le long de l'axe de succession (F) est reliée à une section de raccordement radialement extérieure (56b ; 156b ; 256b) de la paire de bobines de ligne individuelle suivante (70 ; 170 ; 270) est connectée à une section de ligne de connexion (80 ; 180 ; 280) connectant électriquement les deux paires de bobines de ligne individuelle (70 ; 170 ; 270), l'une des sections de connexion (58b ; 158b ; 258b) est située dans la zone de couche d'une couche (68) parmi la première (66) et la deuxième couche (68) et l'autre section de raccordement respective (56b ; 156b ; 256b) est située dans la zone de couche de l'autre couche respective (66) parmi la première (66) et la deuxième couche (68).

5. Stator de moteur linéaire (10 ; 110 ; 210) avec un agencement d'enroulement (11 ; 111 ; 211) pouvant être alimenté en courant selon la revendication 4, **caractérisé en ce que** la section de ligne de connexion (80 ; 180 ; 280) de chacune des paires de bobines de ligne unique (70 ; 170 ; 270) connectées par celle-ci s'étend dans une couche différente (66, 68) à l'écart de la paire de bobines de ligne unique respective (70 ; 170 ; 270) et dans une section d'échange (82 ; 182 ; 282) située à distance des deux paires de bobines de ligne unique (70 ; 170 ; 270) reliées directement par la section de ligne de liaison (80 ; 180 ; 280) entre les deux zones de couche, de préférence la section d'échange (82 ; 182 ; 282) d'au moins une section de ligne de liaison (80 ; 180 ; 280) s'étendant de part et d'autre du centre longitudinal axial (LM) - rapporté à l'axe de succession (F) - de la distance axiale (AA) que les paires de bobines de ligne unique (70 ; 170 ; 270) reliées directement par la section de ligne de liaison (80 ; 180 ; 280) présentent entre elles.

6. Stator de moteur linéaire (10 ; 110 ; 210) comportant un agencement d'enroulement (11 ; 111 ; 211) pouvant être alimenté en courant selon l'une quelconque des revendications précédentes,
**caractérisé en ce que** la au moins une paire de bobines de ligne unique (70 ; 170 ; 270) est reçue dans un boîtier de bobines (12 ; 112 ; 212), une cavité de réception (60 ; 160 ; 260) étant formée dans le boîtier de bobine (12 ; 112 ; 212) pour chaque paire de bobines de ligne unique (70 ; 170 ; 270), dans laquelle la paire de bobines de ligne unique (70 ; 170 ; 270) associée à la cavité de réception (60 ; 160 ; 260) est reçue, le boîtier de bobine (12 ; 112 ; 212) comprenant de préférence deux composants de boîtier (12a, 12b ; 112b ; 212b) qui, connectés entre eux, forment le boîtier de bobine (12 ; 112 ; 212), une partie de chaque cavité de réception (60 ; 160 ; 260) étant formée en tant qu'évidement (60a) dans un composant de boîtier (12a) et une autre partie étant formée en tant qu'évidement (60b ; 160b ; 260b) dans l'autre composant de boîtier (12b ; 112b ; 212b), les deux parties formées dans des composants de boîtier différents (12a, 12b ; 112b ; 212b) d'une seule et même cavité de réception (60 ; 160 ; 260) sont de tailles différentes, notamment qu'elles s'étendent à partir du plan d'assemblage commun à l'état assemblé, de préférence orthogonal aux axes d'enroulement parallèles de la paire de bobines (PW), à des profondeurs différentes dans les deux composants de boîtier (12a, 12b ; 112b ; 212b).

7. Stator de moteur linéaire (10 ; 110 ; 210) avec un agencement d'enroulement (11 ; 111 ; 211) pouvant être alimenté en courant selon la revendication 6, en incluant la revendication 5,
**caractérisé en ce que** le boîtier de bobine (12 ; 112 ; 212) présente une zone de bobine (20 ; 120 ; 220) dans laquelle sont agencées les cavités de réception (60 ; 160 ; 260) recevant les paires de bobines de ligne unique (70 ; 170 ; 270), et une zone de raccordement (22 ; 122 ; 222) adjacente à la zone de bobine (20 ; 120 ; 220), dans laquelle sont agencés les sections de ligne de liaison (80 ; 180 ; 280), de préférence toutes les cavités de réception (60 ; 160 ; 260) étant situées du même côté de la zone de raccordement (22 ; 122 ; 222).

8. Stator de moteur linéaire (10 ; 110) avec un agencement d'enroulement (11 ; 111) pouvant être alimenté en courant selon l'une des revendications 6 à 7, **caractérisé en ce qu'**au moins un canal de refroidissement (88 ; 188) est formé dans le boîtier de bobine (12 ; 112), dans lequel pénètre au moins respectivement une section de chaque paire de bobines de ligne unique (70 ; 170) parmi la pluralité de paires de bobines de ligne unique (70 ; 170), de sorte que les sections pénétrantes peuvent être mouillées par un fluide de refroidissement circulant dans le canal de refroidissement (88 ; 188), de préférence les cavités de réception (60 ; 160) forment une section d'au moins un canal de refroidissement (88 ; 188), de préférence particulière une pluralité de cavités de réception (60 ; 160) étant connectées entre elles par un canal de circulation (90 ; 190) à travers lequel le fluide de refroidissement peut circuler d'une cavité de réception (60 ; 160) dans une cavité de réception (60 ; 160) suivante le long de l'axe de succession (F).

9. Stator de moteur linéaire (10 ; 110) avec un agencement d'enroulement (11 ; 111) pouvant être alimenté en courant selon la revendication 8,
**caractérisé en ce qu'**une paire de bobines de ligne unique (70 ; 170) n'est connectée que localement par liaison de matière à une paroi de la cavité de réception annulaire (60 ; 160) qui la reçoit, de telle sorte que la liaison par liaison de matière permette une circulation de fluide de refroidissement d'un canal de refroidissement à la cavité de réception (60 ; 160) vers un canal de circulation (90 ; 190) évacuant le fluide de refroidissement de la cavité de réception (60 ; 160) dans un seul sens de circulation le long de la cavité de réception annulaire (60 ; 160).

10. Stator de moteur linéaire (110) comportant un agencement d'enroulement (111) pouvant être alimenté en courant selon la revendication 8, en incluant l'une des revendications 4 à 5,
**caractérisé en ce qu'**au moins un tronçon de ligne de connexion (180), de préférence une pluralité de tronçons de ligne de connexion (180), est reçu dans le canal de circulation (190) reliant les cavités de réception (160) entre elles.

11. Stator de moteur linéaire (10 ; 110 ; 210) avec un agencement d'enroulement (11 ; 111 ; 211) pouvant être alimenté en courant selon l'une des revendications 6 à 10,
**caractérisé en ce que** le boîtier de bobine (12 ; 112 ; 212) présente des formations de montage (16 ; 116 ; 216), en particulier des ouvertures de passage (16 ; 116 ; 216) traversant le boîtier de bobine (12 ; 112 ; 212), au moyen desquelles le boîtier de bobine (12 ; 112 ; 212) peut être relié, de préférence de manière amovible, à une structure porteuse (T).

12. Stator de moteur linéaire (10 ; 110 ; 210) avec un agencement d'enroulement (11 ; 111 ; 211) pouvant être alimenté en courant selon la revendication 11, en incluant la revendication 7,
**caractérisé en ce qu'**au moins une partie des formations de montage (16 ; 116 ; 216) est disposée ou/et formée dans la zone de raccordement (22 ; 122 ; 222), de préférence au moins une partie des formations de montage (16 ; 116 ; 216) comprenant des ouvertures de passage (16 ; 116 ; 216) traversant le boîtier de bobine (12 ; 112 ; 212), chacune des ouvertures de passage (16 ; 116 ; 216) étant agencée dans une zone de fenêtre (81 ; 181 ; 281) entourée par des tronçons de ligne de liaison (80 ; 180 ; 280).

13. Stator de moteur linéaire (210) comportant un agencement d'enroulement (211) pouvant être alimenté en courant selon l'une quelconque des revendications 6 à 12,
**caractérisé en ce qu'**au moins un évidement de capteur (296, 298) est formé dans le boîtier de bobine (212) pour recevoir un capteur, comme par exemple un capteur de température.

14. Stator de moteur linéaire (110) comportant un agencement d'enroulement (11) pouvant être alimenté en courant selon l'une des revendications 6 à 13, **caractérisé en ce qu'**il comprend un boîtier de sonde (30) dans lequel est reçue une sonde (32), notamment une sonde (32) sensible au champ magnétique, le boîtier de sonde (30) étant connecté au boîtier de bobine (12), le boîtier de sonde (30) étant de préférence connecté de manière amovible au boîtier de bobine (12) conformément à sa destination, des formations de fixation (36) étant de préférence formées sur le boîtier de sonde (30), lesquelles peuvent être mises en prise avec des contre-formations de fixation (40) formées sur le boîtier de bobine (12) pour connecter le boîtier de bobine (12) et le boîtier de sonde (30).
